(19) Europäisches Patentamt
European Patent Office
Office européen des brevets

(11) EP 2 076 822 B1

(12) EUROPEAN PATENT SPECIFICATION

(45) Date of publication and mention
of the grant of the patent:
**25.08.2010 Bulletin 2010/34**

(51) Int Cl.:
*G05B 5/01* (2006.01)   *G05B 11/28* (2006.01)

(21) Application number: 07844184.7

(22) Date of filing: 11.10.2007

(86) International application number:
**PCT/US2007/081148**

(87) International publication number:
**WO 2008/048865 (24.04.2008 Gazette 2008/17)**

(54) **PULSE WIDTH MODULATION SEQUENCE GENERATING A NEAR CRITICAL DAMPED STEP RESPONSE**

IMPULSWEITENMODULATIONSSEQUENZ ZUR ERZEUGUNG EINER FAST KRITISCH GEDÄMPFTEN SCHRITTREAKTION

SÉQUENCE DE MODULATION D'IMPULSIONS EN DURÉE GÉNÉRANT UNE RÉPONSE À AMORTISSEMENT QUASI-CRITIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.10.2006 US 549586**

(43) Date of publication of application:
**08.07.2009 Bulletin 2009/28**

(73) Proprietor: **IPower Holdings LLC**
**Wilmington, Delaware 19808 (US)**

(72) Inventor: **GIZARA, Andrew Roman**
**Lake Forest, CA 92630 (US)**

(74) Representative: **Kazi, Ilya**
**Mathys & Squire LLP**
**120 Holborn**
**London EC1N 2SQ (GB)**

(56) References cited:
**US-A- 4 916 635    US-A1- 2004 049 527**
**US-B1- 6 292 122    US-B2- 6 940 189**

- YANAGAWA S ET AL: "PID auto-tuning controller using a single neuron for DC servomotor" INDUSTRIAL ELECTRONICS, 1992., PROCEEDINGS OF THE IEEE INTERNATIONAL SYMPOSIUM ON XIAN, CHINA 25-29 MAY 1992, NEW YORK, NY, USA,IEEE, US, 25 May 1992 (1992-05-25), pages 277-280, XP010045433 ISBN: 0-7803-0042-4
- FANG LIN LUO ET AL: "Mathematical modeling of power DC/DC converters" POWER SYSTEM TECHNOLOGY, 2004. POWERCON 2004. 2004 INTERNATIONAL CONFERENCE ON SINGAPORE 21-24 NOV. 2004, PISCATAWAY, NJ, USA,IEEE, US, 21 November 2004 (2004-11-21), pages 17-22Vol1, XP010811361 ISBN: 0-7803-8610-8

**Description**

BACKGROUND OF THE INVENTION

1. FIELD OF THE INVENTION

The present invention is generally in the field of control systems. More specifically, the present invention is in the field of use of pulse width modulation in a control system. This specification herein exemplifies the present invention by an open loop, and subsequently, a closed loop digital power supply embodying voltage or current regulation.

2. BACKGROUND ART

For more than half a century, control system engineers have implemented pulse width modulation schemes for driving a regulated voltage or current from a control plant. Control system engineers of ordinary skill in the art have long since designed digital open loop pulse width modulation control schemes to power loads that do not require precise voltage or current regulation. These digital open loop pulse width modulation control systems generally have powered loads such as DC motors, or heating elements, or other inductive and/or resistive loads which tolerate a system step response exhibiting large overshoot, for instance in excess of fifty percent beyond the set-point. Given a load that tolerates such step responses of extreme overshoot, digital open loop pulse width modulation design offers advantages of substantial cost savings in terms of reduced component count and ease of implementation due to modest design complexity.

Recently, advances in semiconductor integrated circuit fabrication processes have given rise to integrated circuits requiring separate power supplies for various parts including a voltage for the input/output pad ring, and a second, unique power supply voltage for the digital core. While this advancement brings the advantage of reduced core power consumption, there arises the problem of regulation of these additional voltages. With the advent of system-on-chip technologies, designers of these devices have only begun to address this requirement for regulating multiple power supply domains on-chip. United States patent 6,940,189 addresses an implementation of a digital open loop pulse width modulation control system as an optimal means to reduce costs and enhance power efficiency of the total system-on-chip solution. The aforementioned reference patent does not address the problem of overshoot in the step response of the switch mode power supply powering the core voltage domain. The semiconductor core voltage exemplifies a capacitive and resistive load requiring precise regulation of voltage and thus typically tolerates voltage excursions of five percent or less beyond its given set-point.

Therefore, there exists a need for a novel low cost, high power efficiency, and reliable pulse width modulation algorithm that overcomes the problem of overshoot in step response while providing power to loads typically requiring precise regulation such as semiconductor cores.

SUMMARY OF THE INVENTION

The present invention is directed to a novel but readily comprehensible algorithm implemented with tools commonly in use by a control engineer of ordinary skill in the art. The present invention depicts such an algorithm using these tools to create a specific pulse width modulation sequence that generates a near critical damped step response in a second order or higher order linear or non-linear system that otherwise would exhibit an under damped step response. The present invention exemplifies the use of tools and method for integrating a semiconductor die of plural power supply voltage domains with an open loop, and subsequently, a closed loop switch mode DC-to-DC converter to obtain optimal power savings, and minimal heat dissipation and component cost.

In addition, the present invention is not limited to application to the exemplary system. The present invention may be applied to control of any second or higher order system mathematically analogous to pulsed control and requiring near critical damped step response. Any electrical, mechanical or electromechanical system under the mathematical analogue of pulsed open loop control may especially benefit from the present invention whereby without the present invention, open loop control could result in a characteristically under damped step response thus rendering such a topology undesirable and the cost benefits and ease of implementation of such open loop topology unrealizable. The present invention places only the design requirements of use of control plant component values of +/-10% tolerance and reasonably accurate estimates of the load of the system, with tolerance of +/-25% depending upon how near to the ideal response time and how much overshoot the system can withstand i.e. the load regulation specification of the control system.

BRIEF DESCRIPTION OF THE DRAWINGS

Figure 1 illustrates a schematic view of an ideal exemplary structure in accordance with one embodiment of the present invention.

Figure 2 illustrates a time domain graphical representation of the step response to pulse width modulation in the structure in Figure 1.

Figure 3 illustrates the equations describing the system, a coefficient, and a pulse sequence that results in a near critical damped step response from the circuit of Figure 1.

Figure 4 illustrates a view of a spreadsheet computer program that generates a pulse width modulation sequence according to one embodiment of the present invention.

Figure 5 illustrates a snippet of simulation code generated by the spreadsheet computer program of Figure 4.

Figure 6 illustrates general equations describing a pulse sequence that results in a near critical damped response to a step in any direction in a practical non-ideal system.

Figure 7 illustrates a state transition diagram of a hypothetical system operating in various states under the control of one embodiment of the present invention.

Figure 8 illustrates a time domain plot of possible transitions in a hypothetical system operating under the control of one embodiment of the present invention.

Figure 9 illustrates an alternate view of the time domain plot of Figure 8.

Figure 10 illustrates a time domain plot of possible transitions in a hypothetical system operating under the control of one embodiment of the present invention.

Figure 11 illustrates a time domain plot of possible transitions in a hypothetical system operating under the control of one embodiment of the present invention.

Figure 12 illustrates a time domain plot of possible transitions in a hypothetical system operating under the control of one embodiment of the present invention.

Figure 13 illustrates a time domain plot of possible transitions in a hypothetical system operating under the control of one embodiment of the present invention.

Figure 14 illustrates the time domain plot of the transitions of Figure 13 with high frequency noise added.

Figure 15 illustrates the time domain plot of the transitions of Figure 13 with low frequency noise added.

Figure 16 illustrates the time domain plot of the transitions of Figure 13 under the condition of the plant components at 110% of their nominal values.

Figure 17 illustrates the time domain plot of the transitions of Figure 13, correcting for the condition of the plant components at 110% of their nominal values.

Figure 18 illustrates the time domain plot of the transitions of Figure 13 under the condition of the plant components at 90% of their nominal values.

Figure 19 illustrates the time domain plot of the transitions of Figure 13, correcting for the condition of the plant components at 90% of their nominal values.

Figure 20 illustrates the time domain plot of the transitions of Figure 13 under the condition of the equivalent load resistance at 125% of its nominal value.

Figure 21 illustrates the time domain plot of the transitions of Figure 13 under the condition of the equivalent load resistance at 75% of its nominal value.

Figure 22 illustrates a schematic view of an alternate embodiment within the scope of the present invention.

DETAILED DESCRIPTION OF THE INVENTION

The present invention pertains to a control system and algorithm for generating a near critical damped step response using pulse width modulation techniques in an inherently under damped system. The following description contains specific information pertaining to various embodiments and implementations of the invention. One skilled in the art will recognize that one may practice the present invention in a manner different from that specifically depicted in the present specification. Furthermore, the present specification has omitted some of the specific details of the present invention in order to not obscure the invention. A person of ordinary skills in the art would have knowledge of the specific details not described in the present specification.

The following drawings and their accompanying detailed description apply as merely exemplary and not restrictive embodiments of the invention. To maintain brevity, the present specification has not specifically described other embodiments of the invention that use the principles of the present invention and has not specifically illustrated other embodiments in the present drawings.

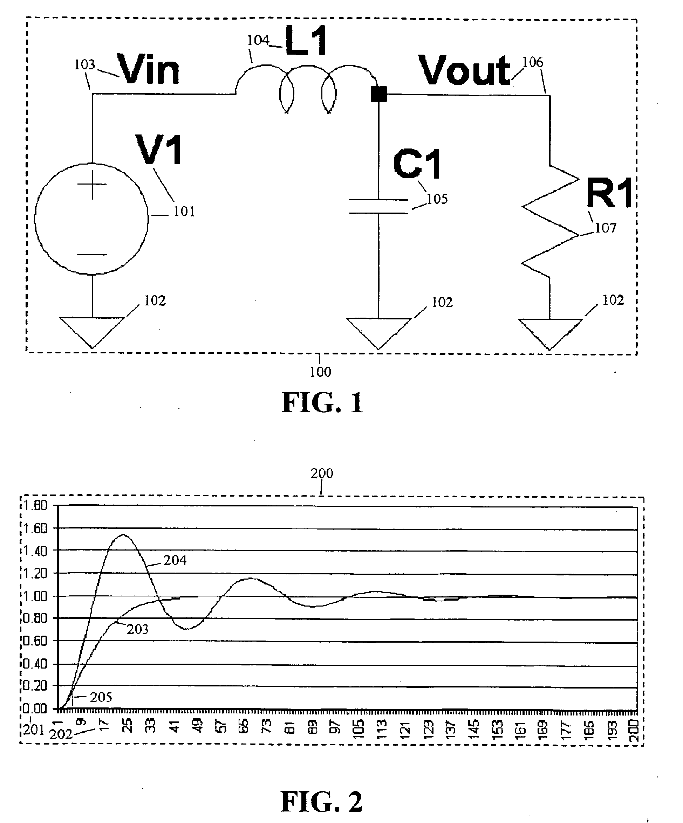

Figure 1 illustrates a schematic of an ideal embodiment of the present invention. Block 100 represents the control plant implemented with ideal models of an exemplary embodiment of the present invention. The exemplary embodiment within block 100 consists of the typical step-down switch mode power supply components that constitute a canonical parallel resonant LRC circuit well understood by one of ordinary skill in the art. In block 100, the input power supply and the controlled switching element have been modeled as an ideal pulsed source 101 referenced to ground 102 and feeding power into the remaining system components from the node entitled Vin 103 through the inductor 104. The node entitled Vout 106 connects the inductor 104 and the output capacitor 105 referenced to ground 102 and forming the energy storage and filtering elements that transform the switched Vin 103 to a DC output Vout 106 that powers the load modeled as a resistor 107 referenced to ground 102. For over a century and a half engineers have successfully analyzed the parallel resonant LRC circuit this model in block 100 represents using ordinary second order differential equation analysis techniques, with the exact solution depending upon values of the L 1 104, R1 107, and C1 105, with respect to each other. Three solutions for the ordinary second order differential equation describing the time domain response to a step forcing function exist each for unique cases: over damped; under damped; and critical damped. The present invention does not address the case of the over damped response which exhibits no overshoot above the set-point and thus presents no danger of exceeding an upper limit of specified load regulation, but does perform less than optimally in regard to slow response time. Thus, the present invention presumes the engineer designing such a system would likely avoid sub-optimal over damped performance, leaving the two remaining cases to consider. The present invention does address the two remaining cases, under damped and critical damped response in such a model 100 and analogous systems.

Figure 2 depicts both an example of an under damped 204 and an example of a critical damped 203 step response in plot 200. The vertical axis 201 represents a normalized set-point scale whereas the horizontal axis 202 represents time given in units of an arbitrary switching period. The degree to which the step response goes under damped coincides with a damping factor of approximately .23, overshooting by more than 55% and one can commonly find this sort of step response given typical switch mode power supply components configured in an open loop topology. A particular point of interest along the plot 200 of the two different step responses one may note includes the point 205 where the responses begin to deviate by approximately 5% from each other.

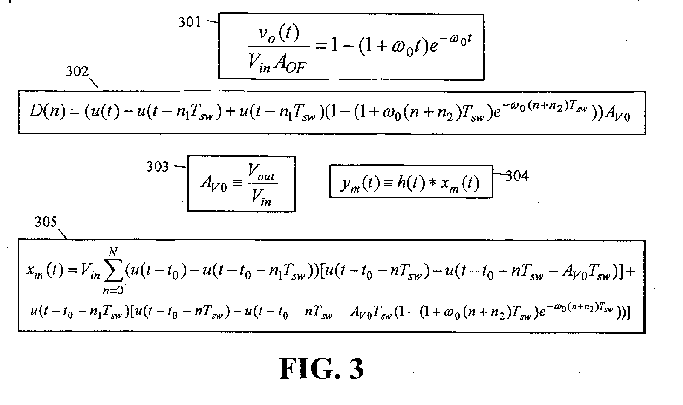

Figure 3 details equations including: equation 301 describing time domain critical damped step response; equation 302 describing the sequence of duty cycles in a pulse train that results in a critical damped response for the circuit in block 100 of Figure 1; a definition 303 of one of the parameters of equation 302; a time domain system equation 304 representing the circuit in block 100 of Figure 1; and equation 305, the general form of the time domain input signal that results in a critical damped step response for the circuit in block 100 of Figure 1. The variable $v_o(t)$ in equation 301 represents the time variant output voltage synonymous with Vout 106 in the model 100 of Figure 1. Likewise, $V_{in}$ in equation 301 represents the amplitude of the input voltage synonymous with the amplitude of Vin 103 in the model 100 of Figure 1. The coefficient $A_{OF}$ corresponds to the gain of an amplifier with feedback, which one of ordinary skill in the art has known to ideally behave analogously to a parallel resonant LRC circuit. Thus, in the immediate example, one may consider the coefficient $A_{OF}$ equivalent to the duty cycle required to obtain a desired set-point in an ideal pulse width modulated control system 100. The two remaining variables, t and $\omega_0$, one may immediately recognize as time in seconds, and the resonant frequency in radians per second, commonly known most directly equal to one over the square root of the value of L 1 104 times C1 105, respectively.

The present invention's substantial departure from prior art and significant novelty exists in the preferred embodiment wherein during the design of a control system the designer applies the right hand side of equation 301 to scale the duty cycle of the pulse sequence as shown in equation 302. Here the inventor introduces the coefficient $A_{V0}$, as defined in equation 303 where both the numerator and denominator consist of DC amplitudes, to stand for the voltage gain required to obtain a desired set-point in an ideal pulse width modulation control system 100 thereby removing any implication of feedback in the topology as one may unnecessarily infer from the coefficient $A_{OF}$ of equation 301. While in its strictest mathematical sense, u(t) fails to meet the requirements of a function, engineers have referred to u(t) as the unit step forcing function as a widely accepted artifice, and this specification will use u(t) in such a conventional manner hereinafter. The discrete variable $n_1$ denotes an integer number of switching periods $T_{sw}$, the inverse of the switching frequency, in which the duty cycle initially assumes its final value in order to obtain the desired voltage gain set-point. During the innovation process, the inventor discovered this initial time period of duration equal to $n_1$ times $T_{sw}$ at the set-point pulse width provides a precise amount of power to initiate a near critical damped step response. The inventor also discovered this time period corresponds to the point 205 where the critical damped and under damped responses begin to deviate by approximately 5% from each other in an ideal second order system model 100. As suggested by equation 304, one may prove using the mathematical operation of convolution that the pulse train defined by its duty cycle in equation 302, using its formal definition as an input signal in equation 305, provides a near critical damped step response, $y_m(t)$ in equation 304, synonymous to Vout 106 in model 100 of Figure 1, in a system 100 that would otherwise exhibit an under damped response had a step directly to the desired duty cycle set-point occurred. In equation 304, h(t) represents the system 100 impulse response equivalent to the derivative with respect to time of $y_m(t)$ when $x_m(t)$ equals a unit step forcing function, u(t). The subscript m in equation 304 implies a unique response $y_m(t)$

associated with a unique input $x_m(t)$ for each transition in system state m indexes. The discrete variable $n_2$ in equations 302 and 305 signifies an offset in time in the application of the critical damped response scaling function from the time at which one applies the scaling to the duty cycle. Therefore the discrete variables $n_1$ and $n_2$ as introduced in equations 302 and 305 carry out the resulting purpose of coarse and fine tuning in the time domain, respectively, to bring the system step response, once tuned, closer towards a critical damped response.

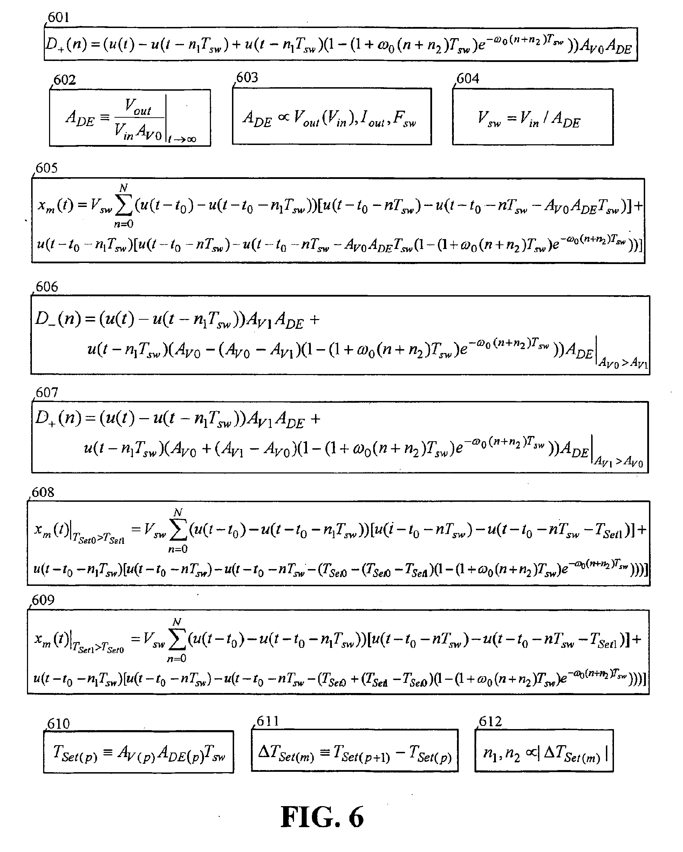

One should note the only subtle difference between equation 302 and 305 exists in that equation 302 assumes the initiation of the step change occurs precisely at t=0 seconds whereas equation 305 allows the initiation of the step change to occur delayed sometime to after t=0. This subtle difference implies step changes subsequent to initial power-on of the control system may attain similar critical damped response through application of the same scaled pulse width modulation input per equation 305. This specification of the present invention examines these additional power state transitions and further general form equations that describe how to attain critical damped step response for higher order systems in subsequent paragraphs describing Figure 6.

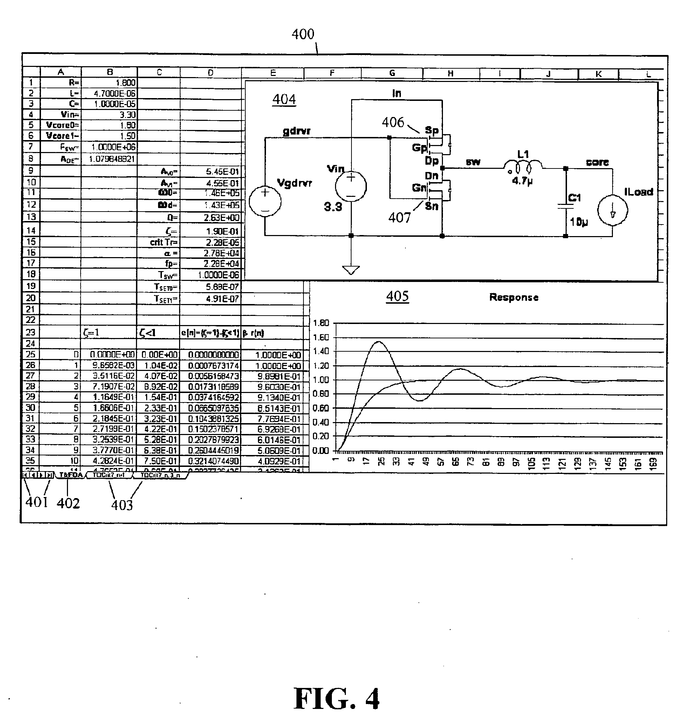

Figure 4 shows a view of a spreadsheet 400 computer program that serves as an analysis tool to the designer, as well as a means to generate the pulse width modulation that results in a near critical damped response, for an inherently under damped system. In a typical spreadsheet 400, graphical user interface buttons 401 enable the user to navigate from the top sheet 402 to subsequent sheets 403. The specification will herein discuss the top sheet 402, and following paragraphs will discuss the subsequent sheets 403. This specification will make use of typical spreadsheet 400 cell reference conventions, such as cell A1 referring to the location where the user entered the text "R=" and in this example, B1, the location where the user entered the value of R. Clearly, the user entered the parameters as defined in Figure 1; in addition, the spreadsheet 400 of Figure 4 shows a schematic plot 404, and a response plot 405 illustrative of the ideal under damped and critical damped response of the exemplary control system under development. As one may readily notice, the schematic plot 404 inserted onto the top sheet 402 of the spreadsheet 400 has replaced the ideal switching element, pulsed source 101, with a physical model of two switching transistors 406, 407 and a model of a pulse width modulation controller labeled Vgdrvr to drive the gates of the physical transistors 406, 407. While the ideal model 100 of Figure 1 embodies a second order linear system, because the physical model of the two switching transistors 406, 407 incur frequency dependent losses, one would immediately recognize the schematic plot 404 thus portrays a model of a higher order system. Furthermore, all the plant elements, L1, C1, and the switching transistors 406, 407 of schematic plot 404 match the values of the exemplary switch mode power supply given in columns 13 and 14 of the reference patent U.S. patent 6,940,189. This design example represents one of many possible configurations within the scope of the present invention and one must view this configuration as exemplary, not restrictive.

In proceeding from the ideal model 100 of Figure 1 to the physical model 404 of Figure 4, the discussion will now concern the parameters entered into the cells of spreadsheet 400 and particularly the new parameters not considered in previous discussions of ideal models. Cells A1 down to A8 comprise the names of physical parameters the designer enters into the spreadsheet 400 with the actual values of those parameters entered into corresponding cells B 1 down to B8. Likewise, formulae reside in cells D9 down to D20 computing other parameters necessary for further computation in the formulae that create the points in the response plots 405 along with the formulae that generate the simulation code for use within a Simulation Program with Integrated Circuit Emphasis commonly known as SPICE to those of ordinary skill in the art. The notion of generation of SPICE code alludes to a quick method of verifying the nearness to critical damped response whereas this specification previously suggested a mathematical computation tool that may perform such an operation as convolution which could equally perform the task of verifying nearness to critical damped response. The approach incorporating the use of SPICE offers the advantage of having graphical or syntactic symbols of plant elements usually within a library physically characterized by vendors of such parts with which the user more directly simulates higher order systems in a hierarchical fashion versus laboring with a mathematics tool over behavioral models of questionable accuracy. Nonetheless, while probably less productive for certain applications, the use of a mathematical computation tool which performs symbolic convolution may hold advantages or provide the only means of system modeling in certain applications. The names of the computed parameters in cells D9 down to D20 appear correspondingly in cells C9 down to C20. As previously stated, the user enters parameters into cells B 1 down to B8 as follows: R, the resistive model for the load in cell B1; L, the inductance value in cell B2; C, the output capacitance in cell B3; Vin, the fixed DC input voltage in cell B4; Vcore0, the output DC voltage in this particular example to which the system first transitions, in cell B5; Vcore1, the output DC voltage to which the system transitions after Vcore0, in cell B6; $F_{sw}$, the switching frequency of the system, in cell B7; and $A_{DE}$, a coefficient which compensates for dynamic error caused by loss from non-ideal behavior in the physical switching elements, in cell B8. This specification will provide further detail as to the mathematical basis for use of such a compensation coefficient as $A_{DE}$ in subsequent paragraphs discussing Figure 6. From these input parameters, the spreadsheet 400 computes intermediate parameters as displayed in cells D9 down to D20. These intermediate parameters include: $A_{V0}$, the ideal voltage gain for the first power state obtained by dividing Vcore0 by Vin, in cell D9; $A_{V1}$, the ideal voltage gain for the second power state in this particular example, obtained by dividing Vcore1 by Vin, in cell D10; $\omega_0$, the resonant frequency in radians per second given by one over the root of the quantity L times C, in cell D11; $\omega_d$, the damped frequency given by the resonant frequency times the root of the quantity one minus the damping factor, in cell D12; Q, the quality factor, given by R over the quantity L times the resonant frequency, in cell D13; ζ, the damping factor, in some texts symbolized as "k" in other texts a lower case zeta as shown, with both of these symbols used interchangeably hereinafter, given by one over two Q, in cell D14; $T_r$, the critical damped rise time from 10% to 90% of the set-point given by 3.33 over $\omega_0$, in cell D 15; α, the exponential damping coefficient also known as the neper frequency, given by one over the quantity of two RC, in cell D16; fp, the pole frequency given by the damped frequency divided by two π, in cell D17; $T_{sw}$, the switching period given by one over the switching frequency, in cell D 18, and $T_{SET0}$, $T_{SET1}$, the time period of a pulse width that provides the desired set-point given by the switching period times the ideal voltage gain times the dynamic error compensation coefficient, in cells D19 and D20 respectively. The immediate method of system analysis or synthesis of critical damped response may not use all of these intermediate parameters, but these parameters may provide insight to one familiar with other analysis methods including but not limited to root locus and pole zero matching. In the remaining cells of the top sheet 402, one can view the value of the discrete variable n, the index of summation in equation 305, starting from cell A25 and proceeding downward. Cell B23 and cell C23 identify the columns below as the normalized critical damped and under damped step response functions by their properties of damping factor range, respectively, with the actual points of the response plots 405 occupying the cells starting at cell B25 and cell C25 and continuing downward corresponding in time to the value of n to the left times the switching period $T_{sw}$. Cell D23 identifies the error in terms of the magnitude of the difference of the critical damped response minus the under damped response, with the points of this error function starting at cell D25 and continuing downward. Finally, cell E23 identifies the column starting at E25 comprising the normalized value of the input signal into the plant that a hypothetical feedback network, synthesized using the prior art pole zero matching method, affects when such a network receives the under damped response as depicted in column C starting at cell C25. Empirical results indicate the pole zero matching feedback network performs sub-optimally with substantially slower response times than the near critical damped response generated by the pulse width sequence of the present invention.

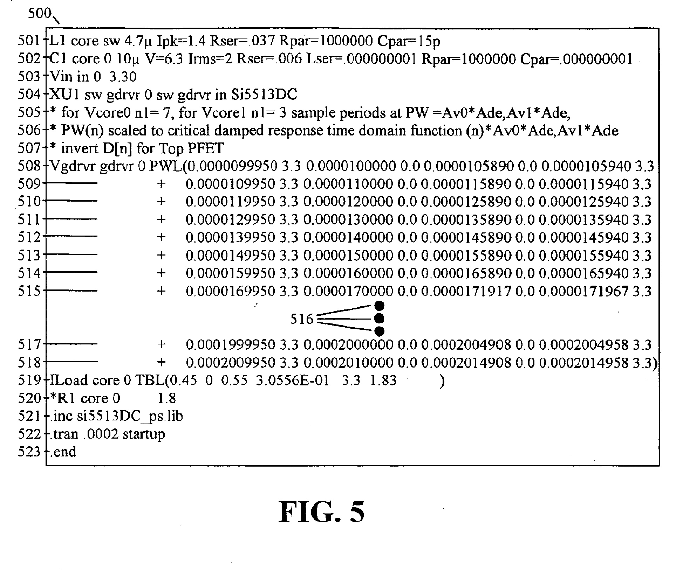

Figure 5 represents an example of a code sheet 500 from the subsequent sheets 403 that generate SPICE executable simulation code based upon the values entered into columns B 1 down to B8 on the top sheet 402 of the spreadsheet 400 in Figure 4. The designer of the exemplary control system copies the entire text of the simulation code sheet 500 into a text window of the graphical user interface of a SPICE simulation program or saves the code sheet 500 as a separate text file to run within SPICE in command-line mode, as the final step of the analysis and verification iterative process. While this specification will not offer much reference to the syntax of SPICE, the discussion will now turn to the individual lines of code labeled with a reference designator from 501 down to 523. While various versions of SPICE generally do not permit line numbers as shown, this specification includes reference designation line numbers 501 down to 523 as a matter of convenience. Line number 501 down to line 504 specify the physical model of the inductor L1, the capacitor C1, the DC input voltage Vin, and the switching transistors 406, 407 with the interconnection of these plant elements as previously graphically depicted in schematic plot 404 of Figure 4. Lines 505 down to 507 appear as comments as indicated by the "*" for the first character in the line. Line 505 indicates the two values of discrete variable $n_1$: the first value equal to seven, the second value equal to three; and the set-point pulse widths for two transitions of power states for this given simulation. Line 506 essentially indicates the discrete variable $n_2$ has a value of zero for both transitions. Line 507 denotes the polarity of the top Field Effect Transistor 406 in the switching element 406, 407, and as such requires a logic inversion of the gate driver output signal gdrvr in order for proper operation of the exemplary switch mode power supply per the reference patent U.S. patent 6,940,189. One should take particular interest in lines 508 down to line 518 as these lines represent the output signal from the model of the gate driver and pulse width modulation controller Vgdrvr with pulse widths computed by the spreadsheet per the values entered in cells B 1 through B8 of the top sheet 402. Lines 508 down to line 514 demonstrate how the discrete variable $n_1$ affects the pulse width as one can readily observe the values for the turn-off time of the top transistor 406 ending in the number sequence 5890 repeating for seven lines corresponding to $n_1$ equal to seven. The pulse width sequence continues from line 515, with the set-point pulse period scaled by the critical damped step response function starting with the scaling factor in cell B33 of the top sheet 402 and continuing downward. The ellipsis 516 merely indicates a discontinuity in Figure 5 wherein an arbitrary number of lines of code, excessive for this drawing figure to exhaustively list, would define the behavior of the model of the gate driver and pulse width modulation controller Vgdrvr throughout the time of the simulation. Lines 517, 518 show the last two lines of the piece wise linear time domain description of the model of the gate driver and pulse width modulation controller Vgdrvr that started on line 508. In lines 517, 518 one can see the time values for the turn-off time of the top transistor 406 ending in the number sequence 4908 having reached its the terminal value of the second set-point after the second transition in this given simulation. Lines 519 and 520 alternately affect the simulation in that line 519 describes Iload, a physical model of a non-linear capacitive load resembling that of the semiconductor core of this exemplary system under development, whereas line 520, commented out as per the "*" first character, describes a simple resistive load such as R1 107 of Figure 1. As the user desires to characterize deviations from the initially estimated load, commenting out line 519 and inserting line 520 facilitates variation of load, in this immediate example, changing the resistance value of 1.8 ohms in line 520 to alternate values. For further verification of physical system functionality, one may replace lines 520 and 521 with a piecewise linear time domain description for Iload, similar to the previously mentioned PWL statement starting from line 508 down to line 518. In this manner, the designer may physically simulate the actual load, with data stored on a digital storage oscilloscope captured empirically from a characteristic load. Likewise, the user may alter the physical parameters of L1 in line 501 and C1 in line 502 to conveniently characterize deviations from initial estimates and model different physical conditions. Subsequent paragraphs in this specification reveal results of variations in various parameters for this exemplary system under development. Line 521 refers the SPICE simulator to the previously stated physically characterized library for the switching transistors 406, 407. Line 522 simply indicates to SPICE the intended time domain transient analysis of 200 microseconds duration while line 523 fulfills a simple syntactic necessity.

Figure 6 extends the equations introduced in Figure 3 beyond an ideal second order system towards a higher order physical system as portrayed in the schematic plot 404 of Figure 4 while also incorporating both transitions from lower to higher and higher to lower power states. One may immediately notice the resemblance equation 601 describing the duty cycle sequence of a transition from a lower to higher power state shares with equation 302. The subtle difference of including a "+" subscripted $D_+(n)$ indicates the duty cycle as a function of discrete time having relevance in a transition from a lower to higher power state, i.e. duty cycle increasing with time. The inclusion of the dynamic error compensation coefficient, $A_{DE}$, as a factor for the duty cycle over all time stands as the only other difference that equation 601 holds apart from equation 302. Here Figure 6 mathematically defines the dynamic error compensation coefficient, $A_{DE}$, in equation 602, relation 603, and applies $A_{DE}$ in equation 604 to define the voltage $V_{SW}$ at node sw as shown in the schematic plot 404 of Figure 4. The need for such a dynamic error compensation coefficient arises due to traversing from the ideal second order model to a physical higher order model, and accounts for switching frequency dependent dynamic losses incurred in the physical switching elements. Note that equation 602 implies the designer obtains the value of $A_{DE}$ after simulating a non-ideal switching element such as that depicted in schematic plot 404 of Figure 4, after having previously applied the ideal voltage gain coefficient, $A_{V0}$, and the power state transition has settled to its final value. The relation 603 implies direct proportionality of $A_{DE}$ to switching frequency, to output voltage with respect to the input voltage, and to the output current. While the previous example treated $A_{DE}$ as a constant, $A_{DE}$ may vary from one power state to the next as implied in equation 610 as a function of the output voltage with respect to the input voltage as well as a function of the output current per the relation 603. Although all the examples in this specification illustrate voltage changes, relation 603 clearly indicates the control system in the scope of the present invention must also manage substantial changes in output current, thus affecting $A_{DE(p)}$ per relation 603 and equation 610, in the same manner as voltage changes. The iterative process of analysis and verification including SPICE simulation determines how substantially any change in current or voltage affects $A_{DE}$ and thus if the change requires application of a transition function that equations 302, 305, 601, and 605 through 609 describe. In the exemplary system under development the range of output currents and voltages differed within limits allowing a constant $A_{DE}$ across all power state transitions to maintain accuracy to within approximately one-third of a percent of the desired set-point. This specification will detail these results in subsequent paragraphs.

Equation 605 of Figure 6 simply applies equation 601 to obtain a general form of the output signal of the gate driver and pulse width modulation controller Vgdrvr, in the same fashion equation 305 applies the equation 302 of Figure 3 for the ideal model. As before in the aforementioned equations of Figure 3, in Figure 6 equation 605 allows the power state transition to occur at any time to whereas equation 601 presumes the transition occurs at t=0. In equation 605, $V_{SW}$ replaces $V_{in}$ of equation 305 since equation 605 introduces $A_{DE}$ per equation 604 as a factor compensating for the dynamic losses through the physical switching element, and thus allows equation 605 to retain the mathematical precision given in the ideal model of equation 305.

Equation 606 introduces the duty cycle sequence of a transition from higher to lower power state and identifies the transition as going from a higher to a lower power state by stipulating the condition $A_{V0}>A_{V1}$. Equation 607 likewise stipulates $A_{V1}>A_{V0}$ in the way it introduces a general form duty cycle sequence for a transition from lower to higher power state. Obviously if the designer sets $A_{V0}$ equal to zero, one then may algebraically reduce both equations 606, 607 to equation 601.

Equations 608 and 609 once again provide a general form of the output signal of the gate driver and pulse width modulation controller Vgdrvr resulting from equations 606, 607, in the same fashion equation 305 applies the equation 302 of Figure 3 for the ideal model. Here equations 608, 609 introduce $T_{Set(p)}$ as the set-point pulse width defined in terms of equation 610, where p indexes the discrete power states and thus these equations describe a means to generate a near critical damped response for $y_m(t)$ in equation 304 for any arbitrary transition m proceeding from any power state p to any power state p+1. Also one may readily observe substituting $\Delta T_{Set(m)}$ from equation 611 into equations 608, 609 reduces both equations 608, 609 to a single general form solution for a near critical damped response. The benefit equations 608, 609 offer in their separate forms avoids potential confusion caused by terms of negative time value. Finally, the relation 612 indicates the magnitude of the change in pulse width time period has direct proportional effects on the discrete variables $n_1$, $n_2$ in the above equations 606 through 609, where $n_1$ and $n_2$ affect a coarse and fine tuning in the time domain, respectively, towards a critical damped response. Progressing to a higher order physical model from an ideal second order model also affects the value of $n_1$ and $n_2$, which further accentuates the necessity of the iterative simulation analysis and verification process.

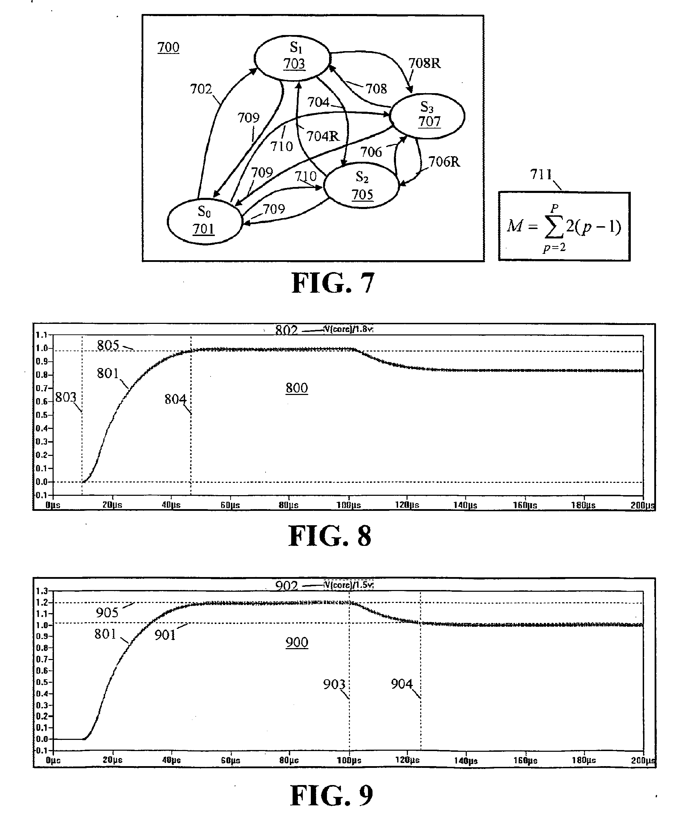

Figure 7 illustrates a canonical general state transition diagram 700 for which this specification will now briefly discuss the application of the equations and relations of Figure 6. As this specification previously alluded, fundamental to the control system design process, the designer first enumerates all power states 701, 703, 705, 707, and transitions 702, 704, 704R, 706, 706R, 708, 708R, 709, 710 in the state transition diagram 700. From the state transition diagram 700, the total number of possible transitions, M, in general appears to grow by the summation given by equation 711 where, as before, p stands for the index to discrete power states with P denoting the total number of power states. However, properties of physical systems in general as described in the equations of Figure 6, allow substantial reduction in complexity. Assuming in the immediate example of diagram 700 the transition from no power whatsoever to the lowest idle power state So 701 requires no intervention by the control system, all transitions 709 to power state So 701 require no algorithmic control, performed merely by the act of removing the power the control system delivers. In most systems, the transition from the idle power state So 701 deterministically occurs resulting in the same power state. In the example of this diagram 700, transition 702 resulting in power state $S_1$ 703 renders possible transitions 710 non-existent, allowing further reduction in complexity. The fact that the expression $\Delta T_{Set(m)}$ from equation 611 when substituted into equations 608, 609 reduces equations 608, 609 into a single equation demonstrates symmetry when any two pulse width changes have equal magnitude. This mathematically demonstrated symmetry as indicated by relation 612 thus implies a practicable reduction of the actual total number of unique power state transitions M in equation 711 by a factor of two. In the immediate example of Figure 7, this implies any transition and its return path, such as transition pairs 704 and 704R, 706 and 706R, and 708 and 708R, essentially comprise the same parameters in their descriptive equations 606 through 609, with merely changing the operation of adding or subtracting the scaled $|\Delta T_{Set(m)}|$, thus reducing non-volatile memory requirements or computational complexity for the overall control system.

Given all these aforementioned reductions in total number of state transitions for which to design, the designer now faces the choice of computation-intensive versus memory-intensive implementations. For the exemplary system under development, the inventor empirically found in the column starting at cell B25 of top sheet 402 of critical damped scaling factors of the pulse width set-point time period, the value N, the practical upper limit of summation in equations 305, 605, 608, 609, equals 63. In other words, the exponential scaling function: $(1-(1+\omega_0(n+n_2)T_{sw})e^{-\omega_0(n+n_2)T_{sw}}$ equals 99.9% when $n+n_2=63$, or the pulse widths have reached 99.9% of the desired set-point width at that point in time for this particular example. The limit N+1 carries importance in determining the length requirement of the column starting at cell B25 of top sheet 402 comprising critical damped scaling factors of the pulse width set-point period. The length of this column directly affects the size of a look-up table in non-volatile memory, as one would ordinarily not consider adding the complexity of computing, during every state of the state machine providing control of the system during transition, the exponential scaling function: $(1-(1+\omega_0(n + n_2)T_{sw})e^{-\omega_0(n+n_2)T_{sw}}$ found throughout as terms in equations 302, 305, 601, 605 through 609. Hence, while a control system embodied within the scope of the present invention could possibly comprise no non-volatile memory whatsoever, this specification considers the least memory-intensive practical application of the present invention to comprise at least enough non-volatile memory or a register file in logic to store a single instance of the above exponential scaling function holding N+1 scaling factors per any one of the equations 305, or 605, or 608, or 609. In the least memory-intensive practical application of the present invention, as stated in the previous paragraph, one may achieve the reduction in non-volatile memory requirement through taking advantage of the symmetry of equations 608, 609 with respect to magnitude of pulse width change $|\Delta T_{Set(m)}|$, given in equation 611 and relation 612. Thus, a state machine may execute the alternate operations of adding or subtracting the scaled $|\Delta T_{Set(m)}|$ in order to reduce memory requirements and computational complexity for the stored N+1 exponential scaling function scaling factors. Given this same state machine model of least memory-intensive application of the present invention, one may provide for differences in the discrete variables $n_1$, $n_2$ from one transition to another by altering pointers to the memory addresses of a single transition's worth of N+1 stored exponential scaling function scaling factors. Actually, in general the designer may decrease the total number of memory locations of scaling factors to $N+1-n_{1(min)}$ where $n_{1(min)}$ represents the lowest value of $n_1$ for all possible transitions in any system under development. To make a physical example of this least memory-intensive application of the present invention, this specification will now assume a non-volatile memory resource having 8192 bits of digital storage for the exemplary system under development. Given the novel approach of the present invention, the minimal amount of parameters needed to describe any one unique power state transition could reside in three memory locations, one for $n_1$, one for $n_2$, and one for $|\Delta T_{Set(m)}|$. With eight bits per word required to express the N+1=64 words of exponential scaling factors applicable to all of the transitions for the exemplary system under development, this leaves 7680 bits remaining for storage of other parameters to describe unique transitions. Given eight bits per word describing the N+1=64 exponential scaling factors, and four bits for each of the aforementioned $n_1$ and $n_2$ parameters, that allows 480 unique transitions. The resource limitation allowing 480 unique transitions constrains the system to thirty-one discrete power states allowable according to the ceiling function defining P derived from evaluating equation 711, considering halving of memory requirements by implementing the aforementioned alternate addition or subtraction operations for symmetric transitions.

In contrast, a least computation-intensive implementation of the present invention requires no computation whatsoever while the state machine controlling the system during transitions merely points to any one of M times (N+1) unique scaled pulse widths desired at that time. In this least compute-intensive application of the present invention, the memory requirement entails M transitions worth of N+1 instances of exponentially scaled pulse periods per any one of the equations 305, or 605, or 608, or 609. Once again, the designer may further decrease the total number of memory locations for each one of the M transitions to N+1-$n_1$ for each $n_1$ unique to each possible transition in the exemplary system under development. For the physical example just presented, having 8192 bits of memory with N+1=64 six-bit words per transition per the exemplary system, this allows M=21 transitions, which constrains the system to five discrete power states allowable according to the ceiling function defining P derived from evaluating equation 711. The present invention applied to the exemplary system under development has not only faster response times, but also the design may demand lesser memory requirements and less computational burden than prior art applied pole zero matching techniques of an externally closed loop. Of course, one may selectively realize any combination of the aforementioned features from both memory-intensive and computation-intensive implementations and remain well within the scope and spirit of the present invention.

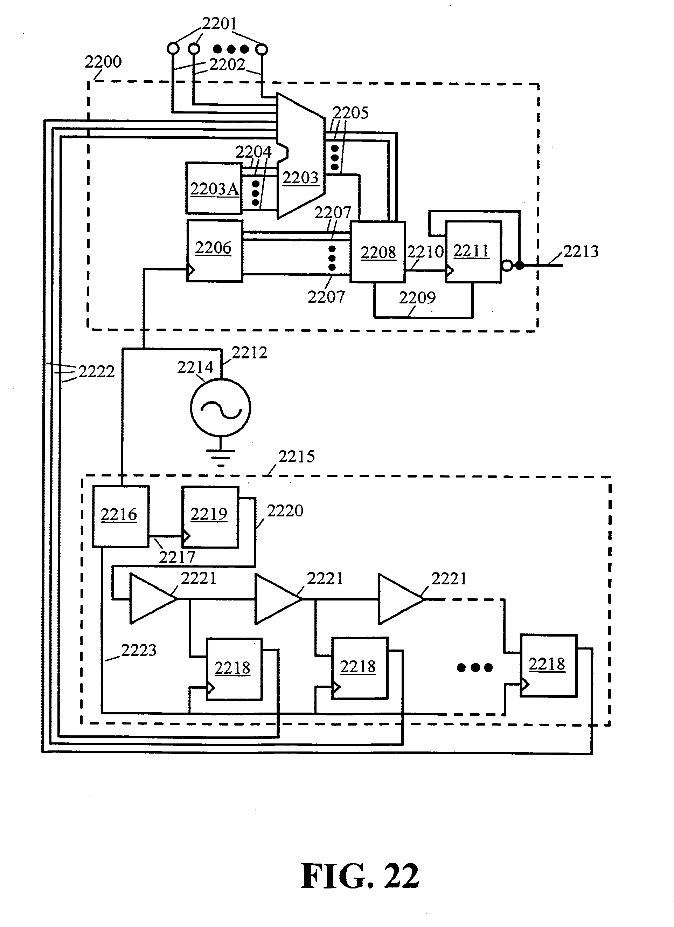

The choice of six or eight bit words in the above examples stems from the exemplary system of the reference patent, having a 25 MHz system clock from which to derive pulse width modulation at a 1 MHz switching frequency. Even when the state machine controlling the system during transitions uses both edges of the 25 MHz system clock to improve pulse width modulation resolution, this provides only 2% accuracy for a switching frequency of 1 MHz, greater than the error accumulated using eight bit words for the parameters in the transition functions in the computation-intensive example. This low time base accuracy inherent in the system results in what one of ordinary skill in the art may refer to as quantization error. A designer of a system within the scope of the present invention may employ several well-understood methods to reduce such quantization error including the method of dithering. Dithering involves alternating in short periods of time between two or more adjacent output codes in order to attain an average output value of greater precision existing between the ordinary output codes realizable without the method of dithering. For the exemplary system under development, when the state machine controlling the system during transition encounters a sequence in the look-up table of pulse width scaling factors for which the present embodiment can practically only attain less accuracy than 1%, the state machine may dither between several adjacent pulse widths over the course of this sequence time to improve accuracy. The typical sequence where dithering may enhance accuracy for this example could exist in the time period describable by equations 305, 605,608, 609 as from the time t=$t_0$ until t= $t_0+n_1T_{sw}$, and also as the exponential scaling function begins to flatten out at 80% near the set-point, as well as during steady state operation. Thus, dithering can also provide another benefit of reducing the scaling function memory requirement of the system. A designer of a system within the scope of the present invention may also simply utilize dithering when changing the pulse width, $|\Delta T_{Set(m)}|$, to accommodate change in output current or voltage that does not result in a response substantially differing from critical damped response, thus not requiring application of a transition function that equations 302, 305, 601, and 605 through 609 describe. Here dithering can again provide the benefit of reducing the scaling function memory requirement of the system. In both open or closed loop implementations, dithering offers several additional advantages aside from reducing quantization error and memory requirements. In steady state operation, dithering disperses the frequency spectrum of pulse width modulation into smaller peaks over a wider band giving the side benefit of diminishing electromagnetic emissions from the overall system. Closed loop systems may suffer a phenomenon known by one of ordinary skill in the art as limit cycle oscillation, caused by insufficient output resolution with respect to input resolution in such control systems, which output dithering can prevent. Thus, any embodiment within the scope of the present invention may apply dithering for any of the aforementioned benefits including reducing system memory requirements, reducing electromagnetic emissions, reducing quantization error or enhancing pulse width modulation resolution in an open loop system, or eliminating limit cycle oscillation in a closed loop system. The specification will discuss an exemplary application of the present invention in a closed loop topology in a subsequent description of Figure 22.

Figures 8 through 21 provide results from varying physical parameters during simulation and thus further define "nearness" to critical damped response in an actual realizable system. Figure 8 illustrates a time domain response plot 800 from a simulation comprising two transitions of power states for an exemplary embodiment of the present invention. As shown in the response plots 200, 405, of Figure 2 and Figure 4, respectively, the vertical axis of response plot 800 of Figure 8 displays a normalized set-point scale for the amplitude. The horizontal axes of the response plots of Figures 8 through 21 now differ from the horizontal axes in plots 200, 405 of Figure 2 and Figure 4 in that the horizontal axes of the plots in Figures 8 through 21 now display units of time in microseconds whereas before the horizontal axes displayed integer multiples of $T_{sw}$ switching periods. The legend 802 affixes a physical value of 1.8 volts to the normalized set-point value for this particular example. The horizontal cursor 805 gauges the response curve 801 rise to within 2% of the normalized set-point, in a period that vertical cursor 804 minus vertical cursor 803 delineates. In this particular exemplary transition, given a pulse sequence describable by equations such as equation 609 with parameters $n_1$ equal to seven and $n_2$ equal to zero driving plant component values as defined in the reference U.S. patent 6,940,189, the resultant rise from 0% to 98% set-point amplitude occurred in 36.61 microseconds. One can readily see practically no evidence of overshoot, well below 1%. Manipulating the cursors 803, 804 similarly as shown in the plot 800, one may find other qualifiers for rise time, such as the customary metric of rise time from 10% to 90% set-point amplitude as calculated in cell D 15 of the top sheet 402 of the spreadsheet 400, empirically found to equal 22.59 microseconds in this simulation plot 800. This empirically found value of customary 10% -to- 90% set-point amplitude rise time coincides with the theoretical critical damped rise time of 22.8 microseconds calculated in cell D 15 of the top sheet 402. One may consider another equally useful measurement of rise time from 0% -to- 95% amplitude for an exemplary system allowing +/-5% regulation tolerance, this time could indicate an empirically proven "power-good" time after the initiation of a transition of certain magnitude $|\Delta T_{Set(m)}|$. This particular simulated transition yielded a value of 31.59 microseconds, in other words less than 32 microseconds from start of transition until "power-good". Thus, the output of a simple five-bit counter counting $T_{sw}$ periods could transmit a "power-good" signal to the rest of the exemplary system under development upon completion of this power state transition. Response times within this range empirically prove faster than that of prior art typical closed-loop systems implemented utilizing the pole-zero design methodology.

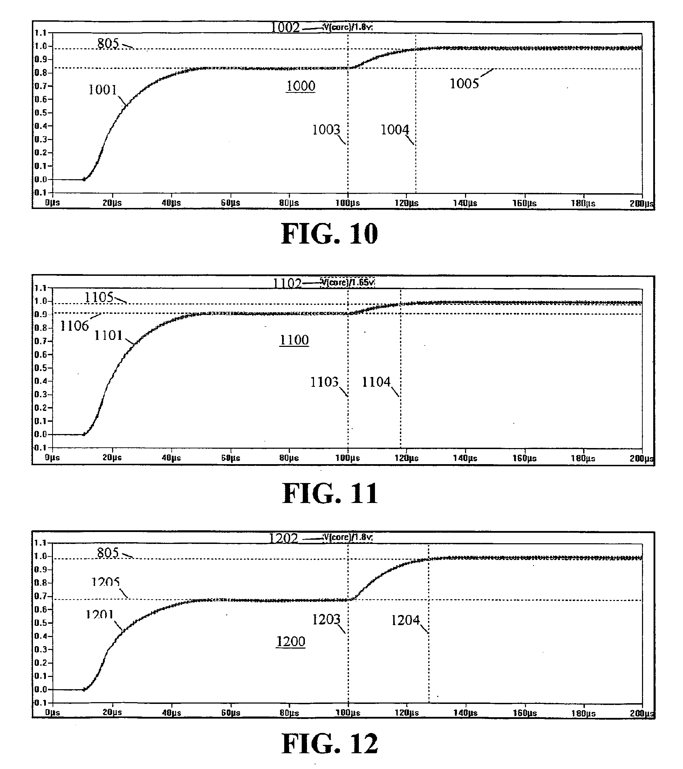

Figure 9 represents an alternate view 900 of the time domain response curve 801 whereby the horizontal cursors 901, 905 and vertical cursors 903, 904 now measure the response times of the second exemplary transition from the same simulation that produced response curve 801 in plot 800 of Figure 8. Now the legend 902 affixes a physical value of 1.5volts to, while horizontal cursor 901 gauges the approach to within 2% of, the second power state set-point. Horizontal cursor 905 and vertical cursor 903 delineate the point of departure from the previous power state. Vertical cursor 904 minus vertical cursor 903 yields a response time of 24.48 microseconds. In this particular exemplary transition, a pulse sequence describable by equations such as equation 608 with parameters $n_1$ equal to four and $n_2$ equal to two driving the same previously specified plant components further illustrates the relation 612 of Figure 6 compared to the previous transition measured in Figure 8 of greater magnitude $|\Delta T_{Set(m)}|$ corresponding to a greater value for $n_1$, with $n_2$ providing fine tuning upon the coarse adjustment of $n_1$. To further prove the validity of relation 612 of Figure 6, Figure 10 illustrates the simulation plot 1000 of a response curve 1001 with horizontal cursors 805, 1005 and vertical cursors 1003, 1004 once again measuring the second transition of equal magnitude $|\Delta T_{Set(m)}|$ but opposite direction of the second transition of the previous response curve 801. With exactly the same values for $n_1$ and $n_2$ for the second transition as in the previous simulation plot 900, this simulation plot 1000, with the legend 1002 once again affixing the physical value to 1.8 volts, vertical cursor 1004 minus 1003 yields a value of time to arrive within 2% of the second power state set-point of 23.22 microseconds. This response time for plot 1000 appears close though not exactly equal to the response time of plot 900, due measurement error and error arising from using a fixed $A_{DE}$ instead of a unique $A_{DE}$ for each power state.

Figure 11 exhibits a response curve 1101 in a time domain plot 1100 wherein the vertical cursors 1103, 1104 and horizontal cursors 1105, 1106 delineate the response time and change of amplitude for a second transition of lesser magnitude $|\Delta T_{Set(m)}|$ than that of the previous three figures. In this plot 1100, legend 1102 affixes the physical value of 1.65 volts to the normalized set-point, thus horizontal cursor 1106 delineates the departure from 1.5V to the cursor 1105 delineating the approach to within 2% of the set-point of 1.65 volts. Vertical cursor 1104 minus 1103 measures the response time equal to 17.99 microseconds. Figure 12 exhibits a response curve 1201 in a time domain plot 1200 wherein the vertical cursors 1203, 1204 and horizontal cursors 1202, 805 delineate the response time and change of amplitude for a second transition of greater magnitude $|\Delta T_{Set(m)}|$ than that of the previous four figures. The values of $n_1$ and $n_2$ for the second transition of this response curve 1201 remain the same as in the previous response curves 801, 901, 1001, 1101 time domain plots 800, 900, 1000, 1100. As before, horizontal cursor 805 marks the approach to within 2% of the set-point of 1.8V according to the legend 1202 whereas the horizontal cursor 1205 delineates the point of departure from 1.2 volts. Here vertical cursor 1204 minus vertical cursor 1203 yields a response time of 27.41 microseconds for a transition time to within 2% of the set-point. Thus, all the aforementioned response curves 801, 901, 1001, 1101, 1201 indicate for the exemplary system under development, $n_1$ equal to seven for transitions of amplitude greater than 1.2 volts and $n_1$ equal to four for transitions less than or equal to 0.6 volts works well. Furthermore, all the aforementioned response curves 801, 901, 1001, 1101, 1201 express the pulse width modulation sequence of the present invention facilitates a near critical damped step response rendering response times predominantly dependent upon the magnitude of change of amplitude for any given transition.

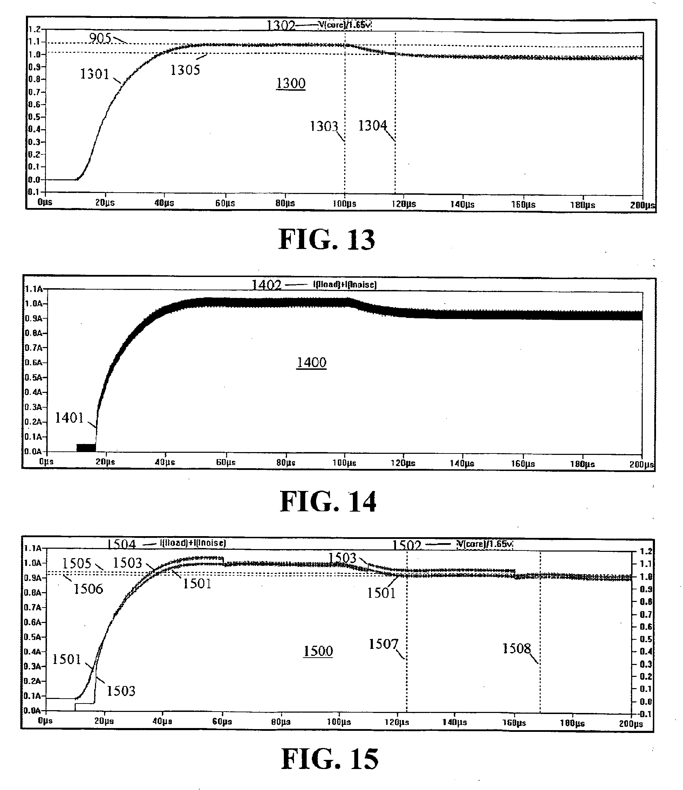

Figure 13 resembles Figure 11 in that the second transition of both response plots 1300 and 1100, respectively exhibit a transition of equal magnitude but opposite direction again. Legend 1302 like legend 1102 affixes the physical value of 1.65 volts to the normalized set-point for the second power state after the second transition. Horizontal cursors 905, 1305 and vertical cursors 1303, 1304 demarcate the amplitude and time of the approach of the response curve 1301 to within 2% of the second power state set-point. Vertical cursor 1304 minus vertical cursor 1303 yields a response time value of 17.15 microseconds, once again differing slightly from the response time of plot 1100. One may account for this difference due to the accuracy of this method of measuring and the error acquired in using a fixed $A_{DE}$ instead of a unique $A_{DE}$ for each power state similar to the response time of plot 1000 differing slightly compared to plot 900. For instance, the inventor found the fixed $A_{DE}$ by following the aforementioned method implied by equation 602 using a Vout of 1.65 volts. Using this fixed $A_{DE}$ for all power states causes an error of +0.33% for a set-point of 1.5 volts, an error of -0.34% for a set-point of 1.8 volts and an error of +1.33% for a set-point of 1.2 volts in the exemplary system under development. Thus, while the magnitude $|\Delta T_{Set(m)}|$ appears equal in the application of equations 608 through 611 to the second transitions of plot 900 and plot 1000, and likewise equal in plot 1100 and plot 1300, the convenient assumption of the viability of an inherent fixed $A_{DE}$ for all the power states can cause a slight aberration in otherwise presumed equal response times.

The plots 1400 and 1500 of Figures 14 and 15 differ from the other plots of Figures 8 through 21 in that the vertical axes on the left hand side of the plots 1400, 1500 now display a scale of amperes instead of a normalized set-point scale. One may readily discern the legend 1402 assigns response curve 1401 the description of load current plus noise current for the plot 1400. While plot 1500 has legend 1504 to do the same for response curve 1503, legend 1502 also affixes the typical physical value for the response curve 1501 to the axis displaying the normalized scale on the right hand side of plot 1500, in this case a physical value of 1.65 volts. Thus, both plots 1400 and 1500 portray the response curves 1401, 1501, 1503 of the exemplary system under development, for the same simulated transitions of plot 1300, only now under the influence of added high frequency and low frequency noise, respectively, as a customary test of stability employed during power supply design. Plot 1400 illustrates the effect of 10 MHz, 50 milliampere, 50% duty cycle noise added, whereas plot 1500 illustrates the effect of 10 KHz, 50 milliampere, 50% duty cycle noise added. In plot 1400, the noise current 1401 has an envelope that would obliterate the view of a voltage response curve and therefore this specification omits the voltage response curve herein substituting several written statistics. With applying a noise 1401 as shown in plot 1400 the voltage noise never exceeded 50 millivolts peak-to-peak according to measurements taken with horizontal cursors over the plot 1400. Plot 1500 shows the use of horizontal cursors 1505, 1506 in this manner to determine the voltage response curve 1501 deviates from the ideal set-point by less than 1.7% in either positive or negative direction while vertical cursors 1507, 1508 merely demarcate where the peak deviations occur on the time scale.

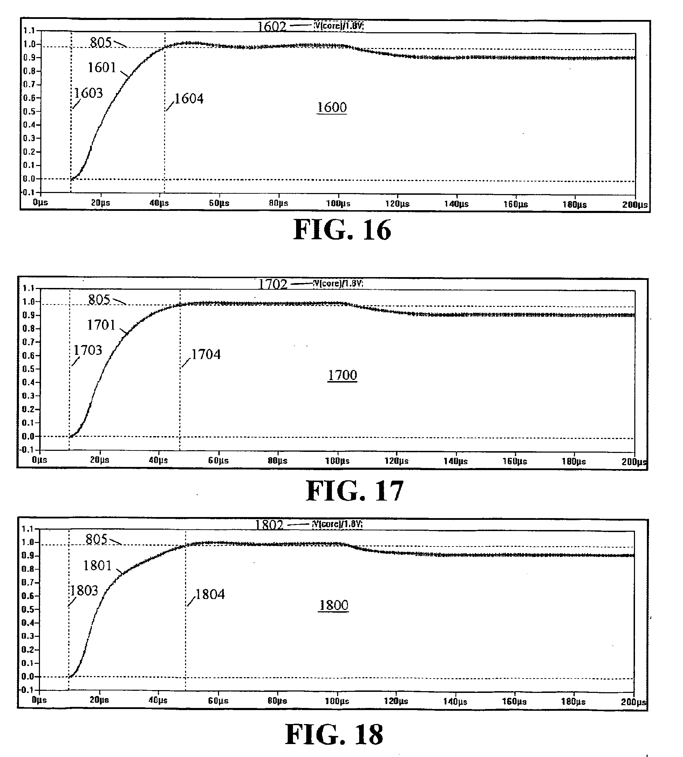

The remaining response plots 1600, 1700, 1800, 1900, 2000, and 2100 in Figures 16 through 21 illustrate the effect of the physical plant and load parameter values differing from those which the designer estimated in the design of the present system under development. The designer easily achieves the effect of deviation of plant and load parameter values in simulation by manually changing lines 501, 502, 519, 520 of code as documented in the simulation code sheet 500 of Figure 5. In lieu of a thorough Monte Carlo analysis, which an automated script process could accomplish, this specification will highlight a particularly effectual subset of operational corners one may encounter in the design of the exemplary system under development visible in the remaining response plots. Because transitions of greatest magnitude enhance the visibility of the effects of parameter variance that result in a departure from near critical damped step response, the legends 1602, 1702, 1802, 1902, 2002, 2102 affix the physical value of greatest magnitude thus far, 1.8 volts to the normalized set-point of the remaining response curves 1601, 1701, 1801, 1901, 2001, 2101, respectively. Response curve 1601 in plot 1600 of Figure 16 once again presents the first transition to a normalized set-point to which legend 1602 affixes the physical value of 1.8 volts. As before, the horizontal cursor 805 delineates the approach to within 2% of the set-point whereby one can readily see a pronounced overshoot phenomenon has occurred. Both the inductance value in line 501 and the capacitance value in line 502 of the simulation code sheet 500 have simultaneously increased 10% beyond their nominal values to which the designer has applied the pulse width modulation sequence of the present invention. Even in such adverse conditions, the aberration of overshoot extends less than 1.6% beyond the set-point according to measurements facilitated by the use of the horizontal cursor 805. Vertical cursor 1604 minus vertical cursor 1603 demarcates the period of rise from 0% to 98% amplitude equal to 31.65 microseconds. As both the inductance and capacitance values have exceeded their nominal values for the given pulse width modulation sequence, one may consider this response curve 1601 as depicting an under-driven operational state, although the resultant overshoot phenomenon renders this under-driven principle counterintuitive. While overshoot of only 1.6% may not violate the specified regulation for the exemplary system under development, the present invention specification will now disclose a technique to recover near critical damped step response given such adverse conditions as plant inductance and capacitance values exceeding their nominal values by 10%. Through a process of iterative coarse adjustments to the $n_1$ variable and fine tuning of $n_2$ one may arrive at the compensation for the inductance and capacitance of the plant components in excess of 10% of their nominal values as shown in response curve 1701 of plot 1700 in Figure 17. Here the horizontal cursor 805 verifies by delineating less than 1.7% undershoot and virtually no overshoot, the response 1701 retained a near critical damped criterion. Cursor 1704 minus 1703 exhibits the 0% -to-98% amplitude rise time which substantiates the notion of an under-driven control plant with the time now equal to 37.03 microseconds, slower than the previous response 1601. Nevertheless, the 0% -to- 95% amplitude rise time remains below 32 microseconds for the compensated response 1701, allowing implementation of the same simple aforementioned "power-good" circuit and output signal despite the need for compensation for excessive plant component values. Setting the value of $n_1$ to eight and $n_2$ to negative one allowed this recovery of near critical damped step response, when the previous under-driven response 1601 existed when $n_1$ equaled seven and $n_2$ equaled zero with both responses 1601, 1701 in the presence of 10% excessive plant component inductance and capacitance values. This exemplifies the use of relation 612 of Figure 6 and the principle of coarse and fine tuning the values of $n_1$ and $n_2$, respectively, to achieve or retain near critical damped step response, quite concisely.

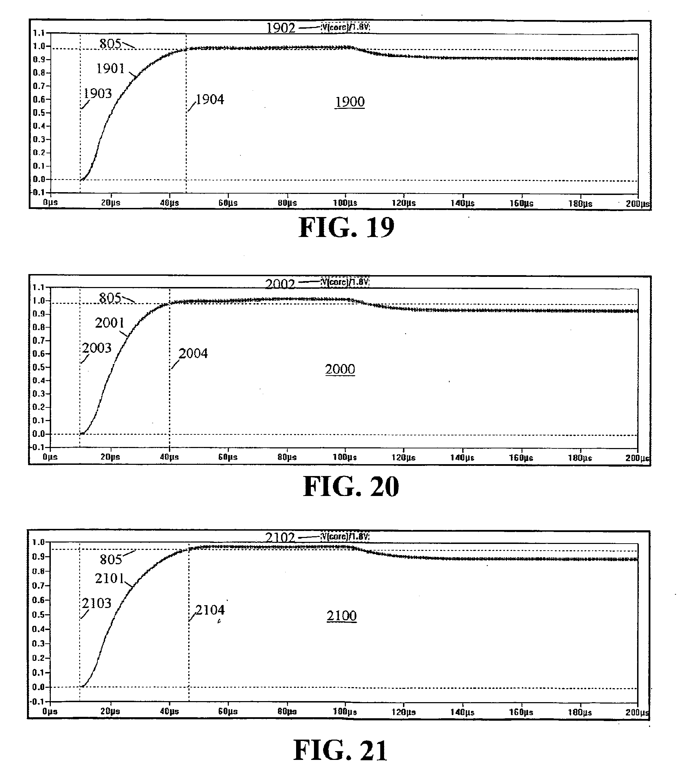

The simulation that generated plot 1800 of Figure 18 presents the condition whereby one can noticeably see an anomalous response curve 1801 has occurred. In this simulation, both the inductance value in line 501 and the capacitance value in line 502 of the simulation code sheet 500 have simultaneously decreased 10% below their nominal values to which the designer has applied the pulse width modulation sequence of the present invention. Given these lower component values qualifies this as an overdriven condition, but once again, the aberration of overshoot extends less than 1.6% beyond the set-point according to measurements facilitated by the use of the horizontal cursor 805. Most significantly, vertical cursor 1804 minus vertical cursor 1803 demarcates the period of rise from 0% to 98% amplitude equal to 39.12 microseconds, and thus even the 0% - to- 95% amplitude rise time, at 34.52 microseconds exceeds the benchmark rise time of less than 32 microseconds which permits implementation of the aforementioned "power-good" circuit and output signal. As before for the under-driven case, the invention enables compensation for the overdriven case, by making a coarse adjustment to $n_1$ and fine tuning $n_2$, only this time, in the opposite direction compared to the previous case of an under-driven plant. In doing so, setting n 1 equal to six and n2 equal to one, the design achieves the response 1901 of simulation plot 1900 in Figure 19. With this compensation, vertical cursor 1904 minus vertical cursor 1903 now yields a 0% -to- 98% rise time of 35.57 microseconds and a 0% -to- 95% rise time of 30.75 microseconds, once again, allowing implementation of the same simple aforementioned "power-good" circuit and output signal despite the need for compensation for less than nominal plant component values. Since the advent of the reference patent 6,940,189, molybdenum permalloy powder "distributed gap" cores for inductors have proliferated the marketplace availing designers to inductors that retain 5% tolerance in inductance over the range of current described therein. In addition, X7R ceramic materials that retain a capacitance tolerance within 10% over the bias voltage described therein have reached a cost effective price. Both of these inductive and capacitive components of advanced materials retain these tolerances while operating over the 0 -to- 70 degree Celsius temperature range. Thus, the present invention and its ability to compensate for plant component value deviations along with components of advanced materials, satisfy a wide range of applications.

The specification will now turn to Figure 20 and Figure 21 to discuss the case of the load deviating from the original estimates, assuming an equivalent resistance 25% greater and 25% lesser, in the response plots 2000, and 2100, respectively. In order to simulate such conditions, the designer comments out line 519, and uncomments line 520 with the appropriate resistor value inserted in the simulation code sheet 500, for the exemplary system under development. Response plot 2000 displays the response curve 2001 due to overdriven plant components. Given the novel approach offered by the present invention, one may address this overdriven state using the same compensation technique that corrected the simulation plot 1800, namely reducing $n_1$ and fine tuning $n_2$ accordingly. In the case of a computation-intensive implementation of the control plant, reducing the value of $A_{DE}$ for the destination power state as shown in plot 2000 can also adequately compensate for such an overdriven condition. Nonetheless, should the designer leave the present condition uncompensated, vertical cursor 2004 minus vertical cursor 2003 delineates a 0% -to- 98% rise time of 30.13 microseconds while one may position horizontal cursor 805 to verify an overshoot of less than 1.8% in plot 2000. Both of these qualifying metrics appear within specified limits despite a load current of 80% nominal for the exemplary system under development. Likewise, response plot 2100 illustrates the response curve 2101 resulting from under-driven plant components due to a load at 133% of rated current. Once again, in the case of a computation-intensive implementation of the control plant, increasing the value of $A_{DE}$ for the power state as shown in plot 2000 can also adequately compensate for such an under-driven condition. While adjusting $n_1$ and $n_2$ may somewhat improve the appearance of the response curve 2101, this alone cannot recover the loss through the physical switching element due to excessive load current, and therefore adjusting $A_{DE}$ makes the desired remedy possible. Without this remedy, vertical cursor 2104 minus 2103 indicates a rise time over 36 microseconds to what horizontal cursor 805 can prove as only 97% set-point amplitude.

Finally this specification will further exemplify the application of the present invention in a closed loop system whereby the digital core introduced in the exemplary reference U.S. patent 6,940,189 affects pulse width, given core cell delay data directly proportional to the core voltage applied. Figure 22 illustrates a block diagram of a closed loop control plant comprising the pulse width modulation controller 2200, along with the feedback block 2215, but excludes the inductive, capacitive, and switching elements needed for implementation within an exemplary embodiment of the present invention. Some functional blocks within Figure 22 duplicate those described in the reference patent, but the specification of the present invention adds circuitry around, and supplemental features within these functional blocks to extend the complete system beyond the scope of the reference patent. The clock output 2212 of oscillator circuit 2214 feeds a counter 2206 that derives the power supply switching frequency, $F_{sw}$, and duty cycle through decoder 2208, with D flip-flop 2211 responding to signals 2209 and 2210 to form the output 2213 that feeds the gate driver Vgdrvr that drives the switching transistors 406, 407. By characterizing the inductive, capacitive, and switching plant components, the load current in all power states and transitions, and knowing its fixed input and output supply voltages, the pulse width modulation controller 2200 may hold values for power supply duty cycle relative to various supply current states. The pulse width modulation controller 2200 may hold power supply duty cycle values in decode logic configurations, or stored in registers or memory locations as depicted by block 2203A, and thus fix the power supply output precisely for every power state. Block 2203 or 2203A may also comprise a portion of or the entire aforementioned state machine controlling the system during transitions. The decoder 2208 compares the frequency dividing clock count on bus 2207 to a value on bus 2205 that represents a duty cycle value corresponding to the present power state, or scaled pulse width during transitions, that obtains the correct output voltage or step response by resetting D flip-flop 2211 by asserting pulse signal 2209 at the correct time. Between the output bus 2204 of block 2203A and bus 2205 into decoder 2208 exists an arithmetic logic unit 2203 that has a specific purpose according to the reference U.S. patent 6,940,189 relating to the function of bus 2202 bringing an offset value input from binary pads 2201. The present invention offers some alternate embodiments wherein the hypothetical use of this offset corrects for the values stored in block 2203A underestimating or overestimating the actual values of plant components or load currents. Once verified empirically, the present invention may use these offset values to compensate any step response or power state by adjusting $n_1$, $n_2$, $A_{DE}$, or $|\Delta T_{Set(m)}|$ in accordance with any of the aforementioned compensating techniques for any of the exemplary computation-intensive or memory-intensive embodiments of the control plant.

While so far this specification of the present invention has discussed an open loop operative topology, bus 2222 from core feedback block 2215 providing an additional coefficient to the arithmetic logic unit 2203 can close the loop for an exemplary system. Considering a structural view, all components discussed thus far must draw power from the input voltage source, but core feedback block 2215 inherently must draw power from the output voltage source, in other words, the core voltage in the exemplary system under development, in order to accurately provide feedback. First, a phase lock loop within the timing control block 2216 takes the clock output 2212 from an oscillator 2214 to produce a higher frequency digital clock 2217 that synchronizes the delay pulse controller 2219 and delay measurement flip-flops 2218 to the pulse width modulation controller 2200. The digital clock 2217 also feeds the rest of the synchronous application logic not shown, in the digital core and may vary in speed dependent upon the application and thus affect the power state of the entire exemplary system under development. The delay pulse controller 2219 controls the output 2220 providing a pulse that propagates through a delay chain symbolized by buffers 2221, as the timing control block 2216 determines using signal 2223 the exact moment the delay measurement flip-flops 2218 sample the delay chain buffers 2221. Thus, the arithmetic logic unit 2203 receives from bus 2222 a vector indicating the number of delay chain buffers 2221 through which the pulse from the controller output 2220 propagated, measured by flip-flops 2218. While this vector on bus 2222 may exist in any arbitrary format, the arithmetic logic unit 2203 decodes and compares this vector to an expected value of delay that guarantees margin in the safe operating range for the rest of the synchronous application logic within the digital core. The system designer may find this expected value of delay by determining the longest delay path in the synchronous application logic within the digital core as given by the design automation tools, and then replicating a delay chain of buffers 2221 of approximately twice the length of this maximum core application logic delay path plus safety margin. The present invention herein defines a coefficient for this propagation time, $A_{TP}$, equal to the ratio of the vector originating from buffers 2221 divided by the quantity of core application logic maximum delay path expected value plus margin. Therefore, for a closed loop feedback path such as that depicted in core block 2215, one may implement complete closed loop control topology for the exemplary system under development by factoring the coefficient $A_{TP}$ into equation 610 to result in: $T_{Set(p)} \equiv A_{V(p)}A_{DE(p)}A_{TP}T_{sw}$ when applying equations 608 or 609 to the design of the control plant.

In closing, one may note that while this specification depicted the application of the present invention in rote fashion, any embodiment which automates these rote processes does not constitute a departure from the scope of the present invention as defined by the appended claims. For instance, any computer program, computer script, spreadsheet, simulation tool, or other design automation tool that performs: the aforementioned time domain tuning; the generation or adjustments to variables or coefficients $n_1$, $n_2$, $A_V$, $A_{DE}$, $A_{TP}$, $T_{SW}$; the generation or alteration of a hardware description language that specifies or models the control plant such as, but not limited to, VHDL, Verilog HDL, or System C, et cetera; the generation of pulse width dithering; or analysis such as margining the plant component capacitance, inductance, switching loss, load current values, or Monte Carlo analysis, clearly does not present a departure from the scope of the present invention as defined by the appended claims.

From the preceding description of the present invention, this specification manifests various techniques for use in implementing the concepts of the present invention without departing from its scope as defined by the appended claims. Furthermore, while this specification describes the present invention with specific reference to certain embodiments, a person of ordinary skill in the art would recognize that one could make changes in form and detail without departing from the scope of the invention as defined by the appended claims. This specification presented embodiments in all respects as illustrative and not restrictive. All parties must understand that this specification does not limited the present invention to the previously described particular embodiments, but asserts the present invention's capability of many rearrangements, modifications, omissions, and substitutions without departing from its scope as defined by the appended claims.

Thus, a pulse width modulation sequence generating a near critical damped step response has been described.

**Claims**

1. A control system for providing a substantially critically damped step response to a circuit in an open loop pulse with modulation control scheme, the control system comprising:

   first means of control comprising elements having, or analogous to having, inductance, capacitance, and power switching capability;
   second means of control comprising pulse width modulation output means; wherein said pulse width modulation means varies the width of output pulses during system state transitions in a prescribed sequence describable by the function:

$$x_m(t) = V_{sw} \sum_{n=0}^{N} (u(t-t_0) - u(t-t_0 - n_1 T_{sw}))[u(t-t_0 - nT_{sw}) - u(t-t_0 - nT_{sw} - T_{Set(p+1)})] +$$

$$u(t-t_0 - n_1 T_{sw})[u(t-t_0 - nT_{sw}) - u(t-t_0 - nT_{sw} - (T_{Set(p)} + (\Delta T_{Set(pm)})(1 - (1 + \omega_0(n+n_2)T_{sw})e^{-\omega_0(n+n_2)T_{sw}})))];$$

   wherein said $x_m(t)$ is a time domain function describing the pulses output from said pulse width modulation means during said system state transition, said system state transition identified uniquely by index m;
   wherein said $V_{sw}$ is the amplitude of the pulses at the physical location where power has traversed said switching element of said first means of control;
   wherein said n is a discrete index of time that counts switching periods starting with the value of zero coinciding with the initiation of said state transition;
   wherein said N is the practical upper limit of said switching periods coincidental to the width of said pulses having reached the desired set-point to within the accuracy of said pulse width modulation means;
   wherein said $u(t)$ is the unit step function;
   wherein said t is time;
   wherein said $t_0$ specifies an arbitrary instant at which said system state transition initiates;
   wherein said $n_1$ is a discrete variable denoting the number of said switching periods starting from said initiation of said state transition in which said pulses initially assume their final value as means to provide a precise amount of power to initiate a near critical damped step response manifest in said first control means;
   wherein said $T_{sw}$ is the time of said switching period of said pulse width modulation means;
   wherein said $T_{Set(p)}$ is the period of the width of the pulses during the desired steady state set-point for a system power state identified uniquely by index p;
   wherein said $T_{Set(m)}$ is the change in the period of the width of the pulses during said system state transition identified uniquely by index m from said system power state identified uniquely by index p to system power state identified uniquely by index p+1 such that said $T_{Set(m)}$ equals $T_{Set(p+1)}$ minus $T_{Set(p)}$;
   wherein said $\omega_0$ represents the resonant frequency of said first control means;
   wherein said $n_2$ is a discrete variable for fine tuning said step response of said first control means during said state transition; and:
   wherein said e is the constant equal to the mathematical base of natural logarithms.

2. The control system of claim 1 wherein said pulse width modulation means comprises closed loop topology; wherein said $T_{Set(p)}$ for said closed loop topology comprises various gain coefficients given by the function: $T_{Set(p)} \equiv A_{V(p)} A_{DE(p)} A_{TP} T_{sw}$ ; wherein said $A_{V(p)}$ is a coefficient representing the ideal steady state gain assuming no loss of power through said first control means for each said system power state identified uniquely by index p; wherein said $A_{DE(p)}$ is a coefficient which compensates for dynamic error caused by loss of power from non-ideal physical behavior in said switching elements for each said system power state identified uniquely by index p; and wherein said $A_{TP}$ is a coefficient comprising the ratio of actual propagation delay through a logic delay chain relative to expected worst case propagation delay through said logic delay chain plus safety margin when said control system is applied to control power to a semiconductor core.

3. The control system of claim 1 wherein said pulse width modulation means comprises means to vary said $n_1$ or said $n_2$ in order to compensate for actual load deviation from design estimates.

4. The control system of claim 1 wherein said pulse width modulation means comprises means to vary said $n_1$ or said $n_2$ in order to compensate for deviation in any actual value of said element within said first means of control compared to design estimates of said any element value within said first means of control.

5. The control system of claim 1 wherein said pulse width modulation means comprises means of alternating in short periods of time between two or more adjacent said output pulses in order to attain an average output pulse width of greater precision existing between the ordinary said output pulse widths within said pulse width modulation means.

6. The control system of claim 1 wherein said pulse width varying term $(1-(1+\omega_0(n+n_2)T_{sw})e^{-\omega_0(n+n_2)T_{sw}})$ occupies locations of memory or logic configurations; wherein the total number of said locations equals $N+1-n_{1(min)}$; wherein said $n_{1(min)}$ is the lowest value of said $n_1$ for all possible said state transitions; and wherein each said location holds a value of said pulse width varying term evaluated for each said $T_{sw}$ period.

7. The control system of claim 1 wherein said $T_{Set(m)}$ occupies memory or logic configurations as a magnitude $|T_{Set(m)}|$; and wherein said pulse width modulation means either adds or subtracts said magnitude $|T_{Set(m)}|$ as a means to reduce the memory or logic requirement for such symmetric state transitions of equal magnitude of change in the period of the width of the pulses.

8. The control system of claim 7 wherein at least one said magnitude $|T_{Sett(m)}|$, and said $n_1$, and said $n_2$, occupy memory locations or logic configurations; and wherein each of said at least one magnitude $|T_{Sett(m)}|$, and said $n_1$, and said $n_2$ apply to at least one said $x_m(t)$ function identified uniquely by index m output from said pulse width modulation means for one or plural said state transitions.

9. The control system of claim 1 wherein said first means of control comprises open loop topology; wherein said $T_{Set(p)}$ for said open loop topology comprises various gain coefficients given by the function: $T_{Set(p)} \equiv A_{V(p)}A_{DE(p)}T_{sw}$; wherein said $A_{V(p)}$ is a coefficient representing the ideal steady state gain assuming no loss of power through said first control means for each said system power state identified uniquely by index p; and wherein said $A_{DE(p)}$ is a coefficient which compensates for dynamic error caused by loss of power from non-ideal physical behavior in said switching elements for each said system power state identified uniquely by index p.

10. The control system of claim 9 wherein said pulse width modulation means comprises means to vary said $n_1$ or said $n_2$ or said $A_{DE(p)}$ in order to compensate for actual load deviation from design estimates.

11. The control system of claim 9 wherein said pulse width modulation means comprises means to vary said $n_1$ or said $n_2$ or said $A_{DE(p)}$ in order to compensate for deviation in any actual value of said element within said first means of control compared to design estimates of said any element value within said first means of control.

12. A method of driving a power source to provide a substantially critically damped step response to a circuit in an open loop pulse width modulation control scheme, the method comprising:

   using first means of control comprising elements having, or analogous to having, inductance, capacitance, and power switching capability and using second means of control comprising pulse width modulation output means to vary the width of output pulses during system state transitions in a prescribed sequence describable by the function:

$$x_m(t) = V_{sw}\sum_{n=0}^{N}(u(t-t_0)-u(t-t_0-n_1T_{sw}))[u(t-t_0-nT_{sw})-u(t-t_0-nT_{sw}-T_{Set(p+1)})]+$$

$$u(t-t_0-n_1T_{sw})[u(t-t_0-nT_{sw})-u(t-t_0-nT_{sw}-(T_{Se(p)}+(\Delta T_{Se(pm)})(1-(1+\omega_0(n+n_2)T_{sw})e^{-\omega_0(n+n_2)T_{sw}})))];$$

   wherein said $x_m(t)$ is a time domain function describing the pulses output from said pulse width modulation means during said system state transition, said system state transition identified uniquely by index m;
   wherein said $V_{sw}$ is the amplitude of the pulses at the physical location where power has traversed said switching element of said first means of control;
   wherein said n is a discrete index of time that counts switching periods starting with the value of zero coinciding with the initiation of said state transition;
   wherein said N is the practical upper limit of said switching periods coincidental to the width of said pulses having reached the desired set-point to within the accuracy of said pulse width modulation means;

wherein said u(t) is
the unit step function;

wherein said t is time;

wherein said to specifies an arbitrary instant at which said system state transition initiates; wherein said $n_1$ is a discrete variable denoting the number of said switching periods starting from said initiation of said state transition in which said pulses initially assume their final value as means to provide a precise amount of power to initiate a near critical damped step response manifest in said first control means;

wherein said $T_{sw}$ is the time of said switching period of said pulse width modulation means;

wherein said $T_{Set(p)}$ is the period of the width of the pulses during the desired steady state set-point for a system power state identified uniquely by index p;

wherein said $T_{Set(m)}$ is the change in the period of the width of the pulses during said system state transition identified uniquely by index m from said system power state identified uniquely by index p to system power state identified uniquely by index p+1 such that said $T_{Set(m)}$ equals $T_{Set(p+1)}$ minus $T_{Set(p)}$;

wherein said $\omega_0$ represents the resonant frequency of said first control means; wherein said $n_2$ is a discrete variable for fine tuning said step response of said first control means during said state transition; and:

wherein said e is the constant equal to the mathematical base of natural logarithms.

13. The method of claim 12 comprising using said predetermined coefficients to control the power source to provide a substantially critically damped step response to the circuit.

14. A computer program comprising computer program code adapted to perform the method of claim 12 or 13.

**Patentansprüche**

1. Regelungs- und Steuerungssystem für das Bereitstellen einer im Wesentlichen kritisch gedämpften Sprungantwort für einen Schaltkreis in einem Pulsweitenmodulations-Regelungsschema mit offenem Regelkreis, wobei das Regelungs- und Steuerungssystem Folgendes umfasst:

eine erste Einrichtung zur Regelung, die Elemente umfasst, die eine Induktivität, Kapazität und Leistungsschaltfähigkeit aufweisen, oder die Elemente analog zu dem Aufweisen einer Induktivität, Kapazität und von Leistungsschaltfähigkeit umfasst;

eine zweite Einrichtung zur Regelung, die eine Pulsweitenmodulations-Ausgabeeinrichtung umfasst; wobei die Pulsweitenmodulationseinrichtung die Breite von Ausgangsimpulsen während Systemzustandsübergängen in einer vorgeschriebenen Sequenz variiert, die durch die folgende Funktion beschreibbar ist:

$$x_m(t) = V_{sw} \sum_{n=0}^{N} \left( u(t - t_0) - u(t - t_0 - n_1 T_{sw}) \right) \left[ u(t - t_0 - n T_{sw}) - u(t - t_0 - n T_{sw} - T_{Set(p+1)}) \right] + u(t - t_0 - n_1 T_{sw})$$

$$\left[ u(t - t_0 - n T_{sw}) - u\left(t - t_0 - n T_{sw} - \left(T_{Set(p)} + \left(\Delta T_{Set(pm)}\right)\left(1 - (1 + \omega_0 (n + n_2) T_{sw}) e^{-\omega_0 (n + n_2) T_{sw}}\right)\right)\right) \right]$$

wobei $x_m(t)$ eine Zeitbereichsfunktion ist, die die Impulse beschreibt, die von der Pulsweitenmodulationseinrichtung während des Systemzustandsübergangs ausgegeben werden, wobei der Systemzustandsübergang eindeutig durch den Index m identifiziert wird;

wobei $V_{sw}$ die Amplitude der Impulse an der physischen Position ist, an der der Strom das Schaltelement der ersten Regelungseinrichtung durchflossen hat; wobei n ein diskreter Index der Zeit ist, der Schaltperioden beginnend mit dem Wert von Null zählt, was mit der Initiierung des Zustandsübergangs zusammenfällt;

wobei N die praktische Obergrenze der Schaltperioden ist, die damit übereinstimmt, dass die Breite der Impulse den gewünschten Sollwert bzw. Einstellungspunkt bis auf innerhalb der Genauigkeit der Pulsweitenmodulationseinrichtung erreicht hat;

wobei u(t) die Einheitssprungfunktion ist;

wobei t die Zeit ist;

wobei $t_0$ einen beliebigen Augenblick spezifiziert, an dem der Systemzustandsübergang startet;

wobei $n_1$ eine diskrete Variable ist, die die Anzahl der Schaltperioden beginnend bei der Initiierung des Zustandsübergangs bezeichnet, in dem die Impulse anfänglich ihren Endwert annehmen, als ein Mittel, um einen genauen Betrag an Strom bereitzustellen, um ein Manifest einer nahe kritisch gedämpften Sprungantwort in der ersten Regelungseinrichtung zu initiieren; wobei $T_{sw}$ die Zeit der Schaltperiode der Pulsweitenmodulationseinrichtung ist; wobei $T_{Set(p)}$ die Periode der Breite der Impulse während des gewünschten Dauerzustand-Sollwerts für einen Systemenergiezustand ist, der eindeutig durch den Index p identifiziert wird;

wobei $T_{Set(m)}$ die Änderung der Periode der Breite der Impulse während des Systemzustandsübergangs, der eindeutig durch den Index m identifiziert wird, von dem Systemenergiezustand, der eindeutig durch den Index p identifiziert wird, zu dem Systemenergiezustand ist, der eindeutig durch den Index p+1 identifiziert wird, so dass $T_{Set(m)}$ gleich $T_{Set(p+1)}$ minus $T_{Set(p)}$ ist;

wobei $\omega_0$ die Resonanzfrequenz der ersten Regelungseinrichtung repräsentiert; wobei $n_2$ eine diskrete Variable für die Feinabstimmung der Sprungantwort der ersten Regelungseinrichtung während des Zustandsübergangs ist; und:

wobei e die Konstante ist, die gleich der mathematischen Basis von natürlichen Logarithmen ist.

2. Regelungs- und Steuerungssystem nach Anspruch 1, wobei die Pulsweitenmodulationseinrichtung eine Topologie mit geschlossenem Regelkreis umfasst; wobei $T_{Set(p)}$ für diese Topologie mit geschlossenem Regelkreis verschiedene Verstärkungskoeffizienten umfasst, die durch die folgende Funktion gegeben sind: $T_{Set(p)} \equiv A_{V(p)}A_{DE(p)}A_{TP}T_{sw}$; wobei $A_{V(p)}$ ein Koeffizient ist, der die ideale Dauerzustand-Verstärkung repräsentiert, vorausgesetzt, dass es keinen Leistungsabfall durch die erste Regelungseinrichtung gibt, für jeden Systemenergiezustand, der eindeutig durch den Index p identifiziert wird; wobei $A_{DE(p)}$ ein Koeffizient ist, der einen dynamischen Fehler kompensiert, der durch einen Leistungsabfall aus einem nicht idealen physikalischen Verhalten in den Schaltelementen verursacht wird, für jeden Systemenergiezustand, der eindeutig durch den Index p identifiziert wird; und wobei $A_{TP}$ ein Koeffizient ist, der das Verhältnis der tatsächlichen Ausbreitungsverzögerung durch eine logische Verzögerungskette relativ zu der erwarteten Ausbreitungsverzögerung im ungünstigsten Fall durch die logische Verzögerungskette plus eine Sicherheitsspanne umfasst, wenn das Regelungs- und Steuerungssystem angewendet wird, um den Strom zu einem Halbleiterkern zu regeln bzw. zu steuern.

3. Regelungs- und Steuerungssystem nach Anspruch 1, wobei die Pulsweitenmodulationseinrichtung eine Einrichtung zum Variieren von $n_1$ oder $n_2$ umfasst, um eine tatsächliche Lastabweichung von Entwurfsschätzwerten zu kompensieren.

4. Regelungs- und Steuerungssystem nach Anspruch 1, wobei die Pulsweitenmodulationseinrichtung eine Einrichtung zum Variieren von $n_1$ oder $n_2$ umfasst, um eine Abweichung in jeglichem tatsächlichen Wert des Elements innerhalb der ersten Regelungseinrichtung im Vergleich zu Entwurfschätzwerten dieses jeglichen Elementwertes innerhalb der ersten Regelungseinrichtung zu kompensieren.

5. Regelungs- und Steuerungssystem nach Anspruch 1, wobei die Pulsweitenmodulationseinrichtung eine Einrichtung zum Alternieren in kurzen Zeiträumen zwischen zwei oder mehr benachbarten dieser Ausgangsimpulse umfasst, um eine durchschnittliche Ausgangsimpulsbreite mit einer größeren Präzision zu erlangen, die zwischen den gewöhnlichen dieser Ausgangsimpulsbreiten innerhalb der Pulsweitenmodulationseinrichtung existiert.

6. Regelungs- und Steuerungssystem nach Anspruch 1, wobei dieser die Impulsbreite variierende Term $(1-(1+\omega_0(n+n_2)T_{sw})e^{-\omega_0(n+n_2)T_{sw}})$ Plätze von Speicher- oder Logik-Konfigurationen belegt; wobei die Gesamtanzahl dieser Plätze gleich $N+1-n_{1(min)}$ ist; wobei $n_{1(min)}$ der niedrigste Wert von $n_1$ für alle möglichen dieser Zustandsübergänge ist; und wobei jeder Platz einen Wert des die Impulsbreite variierenden Terms ausgewertet für jede $T_{sw}$-Periode gespeichert hält.

7. Regelungs- und Steuerungssystem nach Anspruch 1, wobei $T_{Set(m)}$ Speicher- oder Logik-Konfigurationen als eine Größe $|T_{Set(m)}|$ belegt; und wobei die Pulsweitenmodulationseinrichtung diese Größe $|T_{Set(m)}|$ als ein Mittel, um die Speicher- oder Logikanforderung für solche symmetrischen Zustandsübergänge von gleicher Größe der Änderung in der Periode der Breite der Impulse zu reduzieren, entweder addiert oder subtrahiert.

8. Regelungs- und Steuerungssystem nach Anspruch 7, wobei wenigstens eine der Größe $|T_{Sett(m)}|$ und $n_1$ und $n_2$ Speicherplätze oder Logik-Konfigurationen belegen; und wobei jedes der wenigstens einen Größe $|T_{Sett(m)}|$ und $n_1$ und $n_2$ für wenigstens eine der $x_m(t)$-Funktion gilt, die eindeutig durch den Index m identifiziert wird, der von der Pulsweitenmodulationseinrichtung für einen oder mehrere der Zustandsübergänge ausgegeben wird.

9. Regelungs- und Steuerungssystem nach Anspruch 1, wobei die erste Regelungseinrichtung eine Topologie mit offenem Regelkreis umfasst; wobei $T_{Set(p)}$ für diese Topologie mit offenem Regelkreis verschiedene Verstärkungskoeffizienten umfasst, die durch die folgende Funktion gegeben sind: $T_{Set(p)} \equiv A_{V(p)}A_{DE(p)}A_{TP}T_{sw}$; wobei $A_{V(p)}$ ein Koeffizient ist, der die ideale Dauerzustand-Verstärkung repräsentiert, vorausgesetzt, dass es keinen Leistungsabfall durch die erste Regelungseinrichtung gibt, für jeden Systemenergiezustand, der eindeutig durch den Index p identifiziert wird; und wobei $A_{DE(p)}$ ein Koeffizient ist, der einen dynamischen Fehler kompensiert, der durch einen Leistungsabfall aus einem nicht idealen physikalischen Verhalten in den Schaltelementen verursacht wird, für jeden Systemenergiezustand, der eindeutig durch den Index p identifiziert wird.

10. Regelungs- und Steuerungssystem nach Anspruch 9, wobei die Pulsweitenmodulationseinrichtung eine Einrichtung zum Variieren von $n_1$ oder $n_2$ oder von $A_{DE(p)}$ umfasst, um eine tatsächliche Lastabweichung von Entwurfsschätzwerten zu kompensieren.

11. Regelungs- und Steuerungssystem nach Anspruch 9, wobei die Pulsweitenmodulationseinrichtung eine Einrichtung zum Variieren von $n_1$ oder $n_2$ oder von $A_{DE(p)}$ umfasst, um eine Abweichung in jeglichem tatsächlichen Wert des Elements innerhalb der ersten Regelungseinrichtung im Vergleich zu Entwurfsschätzwerten des jeglichen Elementwertes innerhalb der ersten Regelungseinrichtung zu kompensieren.

12. Verfahren zum Ansteuern einer Stromquelle, um eine im Wesentlichen kritisch gedämpfte Sprungantwort für einen Schaltkreis in einem Pulsweitenmodulations-Regelungsschema mit einem offenen Regelkreis bereitzustellen, wobei das Verfahren Folgendes umfasst:

Verwenden einer ersten Einrichtung zur Regelung, die Elemente umfasst, die eine Induktivität, Kapazität und Leistungsschaltfähigkeit aufweisen, oder die Elemente analog zu dem Aufweisen einer Induktivität, Kapazität und von Leistungsschaltfähigkeit umfasst, und das Verwenden einer zweiten Einrichtung zur Regelung, die eine Pulsweitenmodulations-Ausgabeeinrichtung umfasst, um die Breite von Ausgangsimpulsen während Systemzustandsübergängen in einer vorgeschriebenen Sequenz zu variieren, die durch die folgende Funktion beschreibbar ist:

$$x_m(t) = V_{sw} \sum_{n=0}^{N} \left( u(t-t_0) - u(t-t_0 - n_1 T_{sw}) \right) \left[ u(t-t_0 - nT_{sw}) - u(t-t_0 - nT_{sw} - T_{Set(p+1)}) \right] + u(t-t_0 - n_1 T_{sw})$$

$$\left[ u(t-t_0 - nT_{sw}) - u\left(t-t_0 - nT_{sw} - \left(T_{Set(p)} + (\Delta T_{Set(pm)})\left(1 - (1+\omega_0(n+n_2)T_{sw})e^{-\omega_0(n+n_2)T_{sw}}\right)\right)\right) \right]$$

wobei $x_m(t)$ eine Zeitbereichsfunktion ist, die die Impulse beschreibt, die von der Pulsweitenmodulationseinrichtung während des Systemzustandsübergangs ausgegeben werden, wobei der Systemzustandsübergang eindeutig durch den Index m identifiziert wird;
wobei $V_{sw}$ die Amplitude der Impulse an der physischen Position ist, an der der Strom das Schaltelement der ersten Regelungseinrichtung durchflossen hat; wobei n ein diskreter Index der Zeit ist, der Schaltperioden beginnend mit dem Wert von Null zählt, was mit der Initiierung des Zustandsübergangs zusammenfällt;
wobei N die praktische Obergrenze der Schaltperioden ist, die damit übereinstimmt, dass die Breite der Impulse den gewünschten Sollwert bis auf innerhalb der Genauigkeit der Pulsweitenmodulationeinrichtung erreicht hat;
wobei u(t) die Einheitssprungfunktion ist;
wobei t die Zeit ist;
wobei $t_0$ einen beliebigen Augenblick spezifiziert, an dem der Systemzustandsübergang startet;
wobei $n_1$ eine diskrete Variable ist, die die Anzahl der Schaltperioden beginnend bei der Initiierung des Zustandsübergangs bezeichnet, in dem die Impulse anfänglich ihren Endwert annehmen, als ein Mittel, um einen genauen Betrag an Strom bereitzustellen, um ein Manifest einer nahe kritisch gedämpften Sprungantwort in der ersten Regelungseinrichtung zu initiieren; wobei $T_{sw}$ die Zeit der Schaltperiode der Pulsweitenmodulationseinrichtung ist; wobei $T_{Set(p)}$ die Periode der Breite der Impulse während des gewünschten Dauerzustand-Sollwerts für einen Systemenergiezustand ist, der eindeutig von dem Index p identifiziert wird;
wobei $T_{Set(m)}$ die Änderung der Periode der Breite der Impulse während des Systemzustandsübergangs, der eindeutig von dem Index m identifiziert wird, von dem Systemenergiezustand, der eindeutig durch den Index p identifiziert wird, zu dem Systemenergiezustand ist, der eindeutig durch den Index p+1 identifiziert wird, so dass $T_{Set(m)}$ gleich $T_{Set(p+1)}$ minus $T_{Set(p)}$ ist;
wobei $\omega_0$ die Resonanzfrequenz der ersten Regelungseinrichtung repräsentiert; wobei $n_2$ eine diskrete Variable für die Feinabstimmung der Sprungantwort der ersten Regelungseinrichtung während des Zustandsübergangs ist; und:
wobei e die Konstante ist, die gleich der mathematischen Basis von natürlichen Logarithmen ist.

13. Verfahren nach Anspruch 12, das das Verwenden der vorbestimmten Koeffizienten zur Regelung bzw. Steuerung der Stromquelle umfasst, um eine im Wesentlichen kritisch gedämpfte Sprungantwort für den Schaltkreis bereitzustellen.

14. Computerprogramm, das einen Computerprogrammcode umfasst, der so ausgelegt ist, dass er das Verfahren nach Anspruch 12 oder 13 durchführen kann.

**Revendications**

1. Système de régulation pour fournir une réponse à amortissement quasi-critique à un circuit dans un schéma de régulation de modulation d'impulsions en durée à boucle ouverte, le système de régulation comprenant :

   des premiers moyens de régulation comprenant des éléments ayant, ou présentant de façon analogue, une capacité d'inductance, de capacitance et de commutation de puissance ;
   des seconds moyens de régulation comprenant des moyens de sortie de modulation de largeur d'impulsions; dans laquelle lesdits moyens de modulation de largeur d'impulsions font varier la largeur des impulsions de sortie au cours des transitions d'état du système dans une séquence prescrite pouvant être décrite par la fonction :

$$x_m(t) = V_{sw} \sum_{n=0}^{N} (u(t-t_0) - u(t-t_0-n_1 T_{sw})) [u(t-t_0-nT_{sw}) - u(t-t_0-nT_{sw}-T_{Set(p+1)})] +$$

$$u(t-t_0-n_1 T_{sw}) [u(t-t_0-nT_{sw}) - u(t-t_0-nT_{sw}-(T_{Set(p)}+(\Delta T_{Set(pm)})(1-(1+\omega_0(n+n_2)$$

$$T_{sw})e^{-\omega_0(n+n_2)T_{sw}}))) ;$$

   dans laquelle ledit $x_m(t)$ est une fonction de domaine temporel décrivant les impulsions produites à partir desdits moyens de modulation de largeur d'impulsions au cours de ladite transition d'état du système, ladite transition d'état du système étant identifiée uniquement par l'indice m ;
   dans laquelle ledit $V_{sw}$ est l'amplitude des impulsions à l'emplacement physique où l'électricité a traversé ledit élément de commutation desdits premiers moyens de régulation ;
   dans laquelle ledit n est un indice discret de temps qui compte les périodes de commutation en partant de la valeur de zéro coïncidant avec le lancement de ladite transition d'état ;
   dans laquelle ledit N est la limite supérieure pratique desdites périodes de commutation coïncidant avec la durée desdites impulsions ayant atteint le point de réglage souhaité dans la limite de la précision desdits moyens de modulation d'impulsions en durée :
   dans laquelle ledit u(t) est la fonction échelon unitaire ;
   dans laquelle ledit t est le temps ;
   dans laquelle ledit $t_0$ spécifie un instant arbitraire auquel ladite transition d'état du système se déclenche ;
   dans laquelle ledit $n_1$ est une variable discrète indiquant le nombre desdites périodes de commutation en partant dudit déclenchement de ladite transition d'état dans laquelle lesdites impulsions prennent initialement leur valeur finale comme moyens pour fournir une quantité précise de puissance pour déclencher un manifeste de réponse à amortissement quasi-critique dans lesdits premiers moyens de régulation ;
   dans laquelle ledit $T_{sw}$ est le temps de ladite période de commutation desdits moyens de modulation de largeur d'impulsions;
   dans laquelle ledit $T_{Set(p)}$ est la période de la largeur des impulsions lors du point de réglage de l'état stable souhaité pour un état de puissance du système identifié uniquement par l'indice p ;
   dans laquelle ledit $T_{Set(m)}$ est le changement dans la période de la largeur des impulsions au cours de ladite transition d'état du système identifiée uniquement par l'indice m à partir dudit état de puissance du système identifié uniquement par l'indice p par rapport à l'état de puissance du système identifié uniquement par l'indice p + 1 de telle sorte que ledit $T_{Set(m)}$ soit égal à $T_{Set(p+1)}$ moins $T_{Set(p)}$ ;
   dans laquelle ledit $\omega_0$ représente la fréquence de résonance desdits premiers moyens de régulation ;
   dans laquelle ledit $n_2$ est une variable discrète pour un réglage fin de ladite réponse transitoire desdits premiers moyens de régulation au cours de ladite transition d'état ; et
   dans laquelle ledit e est la constante égale à la base mathématique des logarithmes naturels.

2. Système de régulation selon la revendication 1, dans lequel lesdits moyens de modulation de largeur d'impulsions comprennent une topologie en boucle fermée ; dans lequel ledit $T_{Set(p)}$ pour ladite topologie en boucle fermée comprend divers coefficients de gain donnés par la fonction: $T_{Set(p)} \equiv A_{V(p)} A_{DE(p)} A_{TP} T_{sw}$ ; dans lequel ledit $A_{V(p)}$ est un coefficient représentant le gain d'état stable idéal supposant l'absence de perte de puissance à travers lesdits premiers moyens de régulation pour chacun desdits états de puissance du système identifiés uniquement par l'indice p ; dans lequel ledit $A_{DE(p)}$ est un coefficient qui compense l'erreur dynamique provoquée par la perte de puissance issue du comportement physique non idéal desdits éléments de commutation pour chacun desdits états de puissance du système identifiés uniquement par l'indice p ; et dans lequel ledit $A_{TP}$ est un coefficient comprenant le rapport du retard de propagation réel à travers une chaîne de retard logique par rapport au retard de propagation du pire des cas escompté à travers ladite chaîne de retard logique plus une marge de sécurité lorsque ledit système de régulation est appliqué pour réguler la puissance sur un noyau semi-conducteur.

3. Système de régulation selon la revendication 1, dans lequel lesdits moyens de modulation de largeur des impulsions comprennent des moyens pour faire varier ledit $n_1$ ou ledit $n_2$ afin de compenser l'écart de charge réel des estimations de calcul.

4. Système de régulation selon la revendication 1, dans lequel lesdits moyens de modulation de largeur des impulsions comprennent des moyens pour faire varier ledit $n_1$ ou ledit $n_2$ afin de compenser l'écart d'une quelconque valeur réelle dudit élément à l'intérieur desdits premiers moyens de régulation par rapport aux estimations de calcul de ladite valeur d'élément quelconque à l'intérieur desdits premiers moyens de régulation.

5. Système de régulation selon la revendication 1, dans lequel lesdits moyens de modulation de largeur des impulsions comprennent des moyens permettant d'alterner au cours de brèves périodes de temps entre deux ou plus desdites impulsions de sortie adjacentes afin d'atteindre une largeur d'impulsion de sortie moyenne de plus grande précision existant entre lesdites durées d'impulsion de sortie ordinaires à l'intérieur desdits moyens de modulation d'impulsions en durée.

6. Système de régulation selon la revendication 1, dans lequel ledit terme variable de la largeur d'impulsion ( $1-(1+\omega_0(n+n_2)T_{sw})e^{-\omega_0(n+n_2)T_{sw}}$) occupe des emplacements de mémoire ou des configurations logiques ; dans lequel le nombre total desdits emplacements est égal à N + 1 - $n_{1(min)}$ ; dans lequel ledit $n_{1(min)}$ est la valeur la plus faible dudit $n_1$ pour toutes lesdites transitions d'état possibles; et dans lequel chacun desdits emplacements contient une valeur dudit terme variable de durée d'impulsion évaluée pour chacune desdites périodes $T_{sw}$.

7. Système de régulation selon la revendication 1, dans lequel ledit $T_{Set(m)}$ occupe la mémoire ou des configurations logiques en tant qu'amplitude $|T_{Set(m)}|$ ; et dans lequel lesdits moyens de modulation de largeur d'impulsions ajoutent ou soustraient ladite amplitude $|T_{Set(m)}|$ afin de réduire l'exigence de mémoire ou de logique pour de telles transitions d'état symétriques d'amplitude de changement égale dans la période de la largeur des impulsions.

8. Système de régulation selon la revendication 7 dans lequel au moins un de ladite amplitude $|T_{Sett(m)}|$ et dudit $n_1$ et ledit $n_2$ occupent des emplacements de mémoire ou des configurations de logique ; et dans lequel chacun de ladite au moins une amplitude $|T_{Sett(m)}|$ et dudit $n_1$ et ledit $n_2$ s'appliquent à l'au moins une de ladite fonction $x_m(t)$ identifiée uniquement par l'indice m produit par lesdits moyens de modulation de largeur d'impulsions pour une ou plusieurs desdites transitions d'état.

9. Système de régulation selon la revendication 1, dans lequel lesdits premiers moyens de régulation comprennent une topologie en boucle ouverte ; dans lequel ledit $T_{Set(p)}$ pour ladite topologie en boucle ouverte comprend divers coefficients de gain donnés par la fonction : $T_{Set(p)} \equiv A_{V(p)} A_{DE(p)} T_{sw}$ ; dans laquelle ledit $A_{V(p)}$ est un coefficient représentant le gain d'état stable idéal supposant l'absence de perte de puissance à travers lesdits premiers moyens de régulation pour chacun desdits états de puissance du système identifiés uniquement par l'indice p ; et dans laquelle ledit $A_{DE(p)}$ est un coefficient qui compense l'erreur dynamique provoquée par la perte de puissance issue du comportement physique non idéal dans lesdits éléments de commutation pour chacun desdits états de puissance du système identifiés uniquement par l'indice p.

10. Système de régulation selon la revendication 9, dans lequel lesdits moyens de modulation de largeur d'impulsions comprennent des moyens pour faire varier ledit $n_1$ ou ledit $n_2$ ou ledit $A_{DE(p)}$ afin de compenser l'écart de charge réel des estimations de calcul.

11. Système de régulation selon la revendication 9, dans lequel lesdits moyens de modulation de largeur d'impulsions comprennent des moyens pour faire varier ledit $n_1$ ou ledit $n_2$ ou ledit $A_{DE(p)}$ afin de compenser l'écart de n'importe quelle valeur réelle dudit élément à l'intérieur desdits premiers moyens de régulation par rapport aux estimations de calcul de ladite n'importe quelle valeur d'élément à l'intérieur desdits premiers moyens de régulation.

12. Procédé de commande d'un bloc d'alimentation pour fournir une réponse à amortissement quasi-critique à un circuit dans un schéma de régulation de modulation de largeur d'impulsions en boucle ouverte, le procédé comprenant :

l'utilisation de premiers moyens de régulation comprenant des éléments ayant, ou possédant de façon analogue, une capacité d'inductance, de capacitance et de commutation de puissance, et l'utilisation de seconds moyens de régulation comprenant des moyens de sortie de modulation de largeur d'impulsions pour faire varier la largeur des impulsions de sortie au cours des transitions d'état du système dans une séquence prescrite pouvant être décrits par la fonction :

$$x_m(t) = V_{sw} \sum_{n=0}^{N} (u(t-t_0) - u(t-t_0 - n_1 T_{sw}))[u(t-t_0 - nT_{sw}) - u(t-t_0 - nT_{sw} - T_{Set(p+1)})] +$$

$$u(t-t_0 - n_1 T_{sw})[u(t-t_0 - nT_{sw}) - u(t-t_0 - nT_{sw} - (T_{Set(p)} + (\Delta T_{Set(pm)})(1 - (1 + \omega_0(n+n_2)$$

$$T_{sw})e^{-\omega_0(n+n_2)T_{sw}})));$$

dans lequel ledit $x_m(t)$ est une fonction de domaine temporel décrivant les impulsions produites par les moyens de modulation de largeur d'impulsions au cours de ladite transition d'état du système, ladite transition d'état du système étant identifiée uniquement par l'indice m ;

dans lequel ledit $V_{sw}$ est l'amplitude des impulsions à l'emplacement physique où l'électricité a traversé ledit élément de commutation desdits premiers moyens de régulation ;

dans lequel ledit n est un indice discret de temps qui compte les périodes de commutation en partant de la valeur de zéro coïncidant avec le déclenchement de ladite transition d'état ;

dans lequel ledit N est la limite supérieure pratique desdites périodes de commutation coïncidant avec la largeur desdites impulsions ayant atteint le point de réglage souhaité dans la limite de la précision desdits moyens de modulation d'impulsions en largeur ;

dans laquelle ledit u(t) est la fonction échelon unitaire ;

dans laquelle ledit t est le temps ;

dans laquelle ledit $t_0$ spécifie un instant arbitraire auquel ladite transition d'état du système se déclenche ;

dans laquelle ledit $n_1$ est une variable discrète indiquant le nombre desdites périodes de commutation en partant dudit déclenchement de ladite transition d'état dans laquelle lesdites impulsions prennent initialement leur valeur finale comme moyens de fournir une quantité précise de puissance pour déclencher un manifeste de réponse à amortissement quasi-critique dans lesdits premiers moyens de régulation ;

dans laquelle ledit $T_{sw}$ est le temps de ladite période de commutation desdits moyens de modulation de largeur d'impulsions ;

dans laquelle ledit $T_{Set(p)}$ est la période de la largeur des impulsions lors du point de réglage de l'état stable souhaité pour un état de puissance du système identifié uniquement par l'indice p ;

dans laquelle ledit $T_{Set(m)}$ est le changement dans la période de la largeur des impulsions au cours de ladite transition d'état du système identifiée uniquement par l'indice m à partir dudit état de puissance du système identifié uniquement par l'indice p par rapport à l'état de puissance du système identifié uniquement par l'indice p + 1 de telle sorte que ledit $T_{Set(m)}$ soit égal à $T_{Set(p+1)}$ moins $T_{Set(p)}$ ;

dans laquelle ledit $\omega_0$ représente la fréquence de résonance desdits premiers moyens de régulation ;

dans laquelle ledit $n_2$ est une variable discrète pour un réglage fin de ladite réponse transitoire desdits premiers moyens de régulation au cours de ladite transition d'état ; et

dans lequel ledit e est la constante égale à la base mathématique des logarithmes naturels.

13. Procédé selon la revendication 12, comprenant l'utilisation desdits coefficients prédéterminés pour réguler le bloc d'alimentation pour fournir une réponse à amortissement quasi-critique au circuit.

14. Programme informatique comprenant un code de programme informatique adapté pour réaliser le procédé selon la revendication 12 ou 13.

**FIG. 1**

**FIG. 2**

EP 2 076 822 B1

301 — 
$$\frac{v_o(t)}{V_{in} A_{OF}} = 1 - (1 + \omega_0 t)e^{-\omega_0 t}$$

302

$$D(n) = (u(t) - u(t - n_1 T_{sw}) + u(t - n_1 T_{sw})(1 - (1 + \omega_0(n + n_2)T_{sw})e^{-\omega_0(n+n_2)T_{sw}}))A_{V0}$$

303 — 
$$A_{V0} \equiv \frac{V_{out}}{V_{in}}$$

$$y_m(t) \equiv h(t) * x_m(t)$$ — 304

305

$$x_m(t) = V_{in} \sum_{n=0}^{N} (u(t - t_0) - u(t - t_0 - n_1 T_{sw}))[u(t - t_0 - nT_{sw}) - u(t - t_0 - nT_{sw} - A_{V0}T_{sw})] +$$

$$u(t - t_0 - n_1 T_{sw})[u(t - t_0 - nT_{sw}) - u(t - t_0 - nT_{sw} - A_{V0}T_{sw}(1 - (1 + \omega_0(n + n_2)T_{sw})e^{-\omega_0(n+n_2)T_{sw}}))]$$

# FIG. 3

23

400

| | A | B | C | D | E | F | G | H | I | J | K | L |
|---|---|---|---|---|---|---|---|---|---|---|---|---|
| 1 | R= | 1.800 | | | | | | | | | | |
| 2 | L= | 4.7000E-06 | | | | | | | | | | |
| 3 | C= | 1.0000E-05 | | | | | | | | | | |
| 4 | Vin= | 3.30 | | | | | | | | | | |
| 5 | Vcore0= | 1.50 | | | | | | | | | | |
| 6 | Vcore1= | 1.50 | | | | | | | | | | |
| 7 | $F_{sw}$= | 1.0000E+06 | | | | | | | | | | |
| 8 | $A_{DE}$= | 1.079848821 | | | | | | | | | | |
| 9 | | | $A_{v0}$= | 5.45E-01 | | | | | | | | |
| 10 | | | $A_{v1}$= | 4.55E-01 | | | | | | | | |
| 11 | | | $\omega 0$= | 1.46E+05 | | | | | | | | |
| 12 | | | $\omega d$= | 1.43E+05 | | | | | | | | |
| 13 | | | Q= | 2.63E+00 | | | | | | | | |
| 14 | | | $\zeta$= | 1.90E-01 | | | | | | | | |
| 15 | | | crit Tr= | 2.28E-05 | | | | | | | | |
| 16 | | | $\alpha$ = | 2.78E+04 | | | | | | | | |
| 17 | | | fp= | 2.28E+04 | | | | | | | | |
| 18 | | | $T_{sw}$= | 1.0000E-06 | | | | | | | | |
| 19 | | | $T_{SET0}$= | 5.69E-07 | | | | | | | | |
| 20 | | | $T_{SET1}$= | 4.91E-07 | | | | | | | | |
| 21 | | | | | | | | | | | | |
| 22 | | | | | | | | | | | | |
| 23 | | $\zeta$=1 | $\zeta$<1 | e[n]=($\zeta$=1)-($\zeta$<1) | $\beta$ r(n) | | | | | | | |
| 24 | | | | | | | | | | | | |
| 25 | 0 | 0.0000E+00 | 0.00E+00 | 0.0000000000 | 1.0000E+00 | | | | | | | |
| 26 | 1 | 9.6582E-03 | 1.04E-02 | 0.0007673174 | 1.0000E+00 | | | | | | | |
| 27 | 2 | 3.5116E-02 | 4.07E-02 | 0.0056158473 | 9.8981E-01 | | | | | | | |
| 28 | 3 | 7.1907E-02 | 8.92E-02 | 0.0173118589 | 9.6030E-01 | | | | | | | |
| 29 | 4 | 1.1649E-01 | 1.54E-01 | 0.0374164592 | 9.1340E-01 | | | | | | | |
| 30 | 5 | 1.6606E-01 | 2.33E-01 | 0.0665097635 | 8.5143E-01 | | | | | | | |
| 31 | 6 | 2.1845E-01 | 3.23E-01 | 0.1043861325 | 7.7694E-01 | | | | | | | |
| 32 | 7 | 2.7199E-01 | 4.22E-01 | 0.1502378571 | 6.9268E-01 | | | | | | | |
| 33 | 8 | 3.2539E-01 | 5.28E-01 | 0.2027879923 | 6.0146E-01 | | | | | | | |
| 34 | 9 | 3.7770E-01 | 6.38E-01 | 0.2604445019 | 5.0609E-01 | | | | | | | |
| 35 | 10 | 4.2824E-01 | 7.50E-01 | 0.3214074490 | 4.0929E-01 | | | | | | | |

401  402  403

FIG. 4

24

500

```
L1 core sw 4.7µ Ipk=1.4 Rser=.037 Rpar=1000000 Cpar=15p
C1 core 0 10µ V=6.3 Irms=2 Rser=.006 Lser=.000000001 Rpar=1000000 Cpar=.000000001
Vin in 0  3.30
XU1 sw gdrvr 0 sw gdrvr in Si5513DC
* for Vcore0 n1= 7, for Vcore1 n1= 3 sample periods at PW =Av0*Ade,Av1*Ade,
* PW(n) scaled to critical damped response time domain function (n)*Av0*Ade,Av1*Ade
* invert D[n] for Top PFET
Vgdrvr gdrvr 0 PWL(0.0000099950 3.3 0.0000100000 0.0 0.0000105890 0.0 0.0000105940 3.3
              +    0.0000109950 3.3 0.0000110000 0.0 0.0000115890 0.0 0.0000115940 3.3
              +    0.0000119950 3.3 0.0000120000 0.0 0.0000125890 0.0 0.0000125940 3.3
              +    0.0000129950 3.3 0.0000130000 0.0 0.0000135890 0.0 0.0000135940 3.3
              +    0.0000139950 3.3 0.0000140000 0.0 0.0000145890 0.0 0.0000145940 3.3
              +    0.0000149950 3.3 0.0000150000 0.0 0.0000155890 0.0 0.0000155940 3.3
              +    0.0000159950 3.3 0.0000160000 0.0 0.0000165890 0.0 0.0000165940 3.3
              +    0.0000169950 3.3 0.0000170000 0.0 0.0000171917 0.0 0.0000171967 3.3
```

516

```
              +    0.0001999950 3.3 0.0002000000 0.0 0.0002004908 0.0 0.0002004958 3.3
              +    0.0002009950 3.3 0.0002010000 0.0 0.0002014908 0.0 0.0002014958 3.3)
ILoad core 0 TBL(0.45 0 0.55 3.0556E-01 3.3 1.83      )
*R1 core 0      1.8
.inc si5513DC_ps.lib
.tran .0002 startup
.end
```

# FIG. 5

601

$$D_+(n) = (u(t) - u(t - n_1 T_{sw}) + u(t - n_1 T_{sw})(1 - (1 + \omega_0(n + n_2)T_{sw})e^{-\omega_0(n+n_2)T_{sw}}))A_{V0}A_{DE}$$

602

$$A_{DE} \equiv \left.\frac{V_{out}}{V_{in}A_{V0}}\right|_{t \to \infty}$$

603

$$A_{DE} \propto V_{out}(V_{in}), I_{out}, F_{sw}$$

604

$$V_{sw} = V_{in} / A_{DE}$$

605

$$x_m(t) = V_{sw} \sum_{n=0}^{N} (u(t - t_0) - u(t - t_0 - n_1 T_{sw}))[u(t - t_0 - n T_{sw}) - u(t - t_0 - n T_{sw} - A_{V0}A_{DE}T_{sw})] +$$

$$u(t - t_0 - n_1 T_{sw})[u(t - t_0 - n T_{sw}) - u(t - t_0 - n T_{sw} - A_{V0}A_{DE}T_{sw}(1 - (1 + \omega_0(n + n_2)T_{sw})e^{-\omega_0(n+n_2)T_{sw}}))]$$

606

$$D_-(n) = (u(t) - u(t - n_1 T_{sw}))A_{V1}A_{DE} +$$

$$u(t - n_1 T_{sw})(A_{V0} - (A_{V0} - A_{V1})(1 - (1 + \omega_0(n + n_2)T_{sw})e^{-\omega_0(n+n_2)T_{sw}}))A_{DE}\Big|_{A_{V0} > A_{V1}}$$

607

$$D_+(n) = (u(t) - u(t - n_1 T_{sw}))A_{V1}A_{DE} +$$

$$u(t - n_1 T_{sw})(A_{V0} + (A_{V1} - A_{V0})(1 - (1 + \omega_0(n + n_2)T_{sw})e^{-\omega_0(n+n_2)T_{sw}}))A_{DE}\Big|_{A_{V1} > A_{V0}}$$

608

$$x_m(t)\Big|_{T_{Set0} > T_{Set1}} = V_{sw} \sum_{n=0}^{N} (u(t - t_0) - u(t - t_0 - n_1 T_{sw}))[u(i - t_0 - n T_{sw}) - u(t - t_0 - n T_{sw} - T_{Set1})] +$$

$$u(t - t_0 - n_1 T_{sw})[u(t - t_0 - n T_{sw}) - u(t - t_0 - n T_{sw} - (T_{Set0} - (T_{Set0} - T_{Set1})(1 - (1 + \omega_0(n + n_2)T_{sw})e^{-\omega_0(n+n_2)T_{sw}})))]$$

609

$$x_m(t)\Big|_{T_{Set1} > T_{Set0}} = V_{sw} \sum_{n=0}^{N} (u(t - t_0) - u(t - t_0 - n_1 T_{sw}))[u(t - t_0 - n T_{sw}) - u(t - t_0 - n T_{sw} - T_{Set1})] +$$

$$u(t - t_0 - n_1 T_{sw})[u(t - t_0 - n T_{sw}) - u(t - t_0 - n T_{sw} - (T_{Set0} + (T_{Set1} - T_{Set0})(1 - (1 + \omega_0(n + n_2)T_{sw})e^{-\omega_0(n+n_2)T_{sw}})))]$$

610

$$T_{Set(p)} \equiv A_{V(p)}A_{DE(p)}T_{sw}$$

611

$$\Delta T_{Set(m)} \equiv T_{Set(p+1)} - T_{Set(p)}$$

612

$$n_1, n_2 \propto |\Delta T_{Set(m)}|$$

# FIG. 6

**FIG. 7**

$$M = \sum_{p=2}^{P} 2(p-1)$$

**FIG. 8**

**FIG. 9**

**FIG. 10**

**FIG. 11**

**FIG. 12**

EP 2 076 822 B1

FIG. 13

FIG. 14

FIG. 15

29

FIG. 16

FIG. 17

FIG. 18

**FIG. 19**

**FIG. 20**

**FIG. 21**

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6940189 B